Europäisches Patentamt

European Patent Office

Office européen des brevets

(11) Publication number: **0 150 523**
**A2**

(12) # EUROPEAN PATENT APPLICATION

(21) Application number: **84201483.9**

(22) Date of filing: **27.04.81**

(51) Int. Cl.⁴: **G 06 F 12/06**

(30) Priority: **25.04.80 US 143974**

(43) Date of publication of application: **07.08.85**
**Bulletin 85/32**

(84) Designated Contracting States: **CH DE FR GB IT LI NL SE**

(60) Publication number of the earlier application in accordance with Art. 76 EPC: **0039227**

(71) Applicant: **DATA GENERAL CORPORATION, Route 9, Westboro Massachusetts 01581 (US)**

(72) Inventor: **Druke, Michael B., 32 Longmeadow Road, Chelmsford Massachusetts 01824 (US)**
Inventor: **Ziegler, Michael L., 166 Ivy Lane, Whitinsiville Massachusetts 01588 (US)**

(74) Representative: **Pears, David Ashley et al, REDDIE & GROSE 16 Theobalds Road, London WC1X 8PL (GB)**

(54) **Data processing system with improved memory system.**

(57)     The main memory of a data processing system comprises a plurality of modules, each with four memory planes (60), each storing 16k 39-bit words (32 bits data plus 7 parity bits). Write data is received from a controller on a write data bus (WDO-38) and read data goes to the controller on a read data bus (RDO-38). Up to 16 modules can be selected by fourselecting bits (MOD SELO-3) which are compared by a comparator (66) with the module's own address (MODO-3).

    The memory planes are accessed in sequence using seven address bits (ADDRO-5, J ADR 6) latched in address latches (67) in conjunction with a row address strobe (RAS) and a column address strobe (CAS) which strobe in row and column addresses sequentially from the latches to complete the selection of a single word to be written or read. Control logic (65) controls selection of write and read operations in response to signals (LDIN, LDOUT), and refreshing in response to a refresh signal (REFRESH).

- 1 -

DATA PROCESSING SYSTEM

The invention relates generally to a data processing system of the kind defined in the introductory part of claim 1.

This application is one of four divisional applications all divided out of our parent application 81301836.3. The numbers and publication numbers of the other three divisional applications are as follows:

The parent application was published under the number 0 039 227 and reference should be made to that publication for a complete description of the whole system.

0150523

- 2 -

The object of the present invention is to provide a data processing system with an improved modular memory system.

The invention is defined in the characterising part of claim 1 and further features and aspects of the invention are defined in the further claims.

The preferred embodiment of the invention utilizes a main memory comprising a plurality of memory modules each having a plurality of memory planes. The cache memory unit has two ports and the main memory normally interfaces with the remainder of the system via this dual port system cache memory unit, block data transfers between the main memory and the system cache being controlled by a bank controller unit.

The invention will be described in more detail, by way of example, with reference to the accompanying drawings, in which:

Figure 1 shows a block diagram of the overall data processing system of the invention;

Figure 2 shows a block diagram of the system cache unit of the system of Figure 1;

Figure 3 shows a block diagram of the bank controller unit of the system of Figure 1;

Figure 4 shows a block diagram of a module of the main memory unit of the system of Figure 1; and

Figures 5 to 19 show specific logic circuitry for implementing the main memory modules of Figure 4.

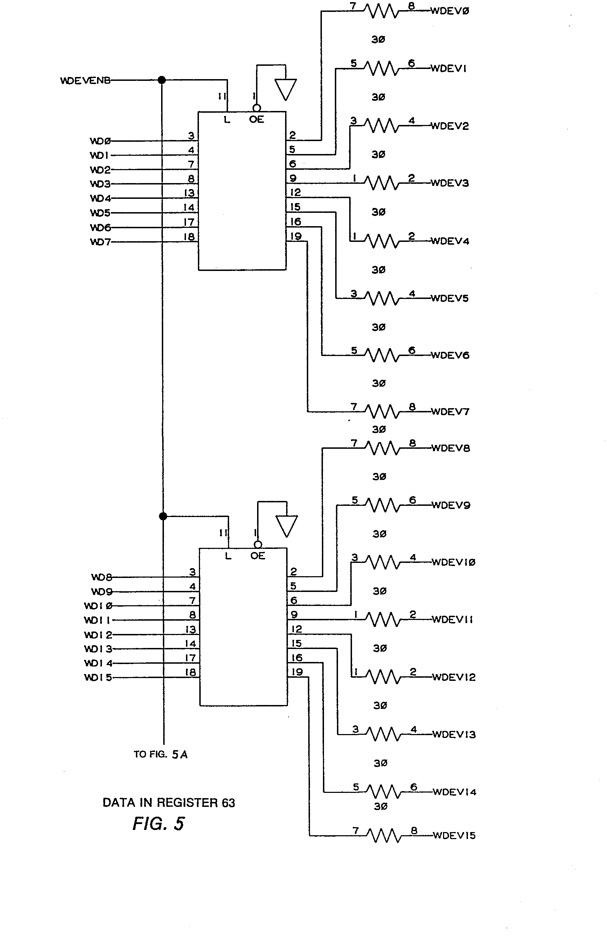

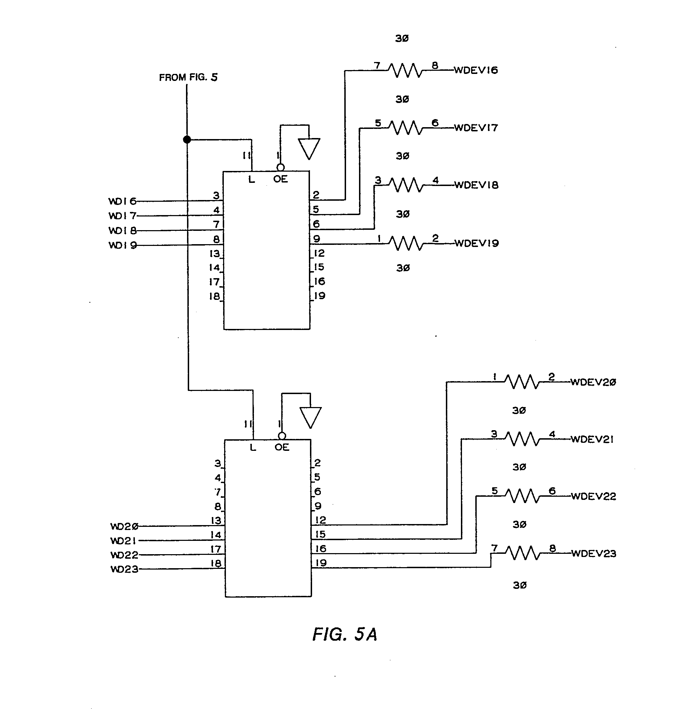

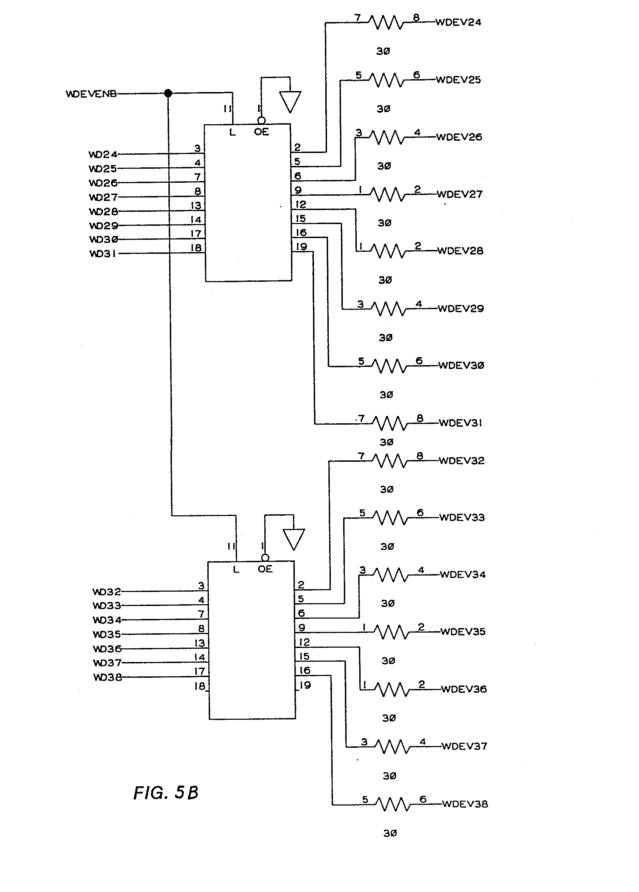

In connection with the above figures, where a particular figure requires more than one sheet of drawings, each subsequent sheet is designated by the same figure number with sequential letters appended thereto (e.g. Figure 5 (for sheet 1); Figure 5A (for sheet 2); Figure 5B (for sheet 3) ... etc).

## General Description

Before describing a specific implementation of the system of the invention, it is helpful to discuss the overall concept thereof in more general terms so that the characteristics that are desired can be described and the description of a particular implementation can be better understood.

- 5 -

A significant aspect of the system of the invention, as discussed above, is the size of the logical address spacer which is available. For purposes of convenience in distinguishing between the previous NOVA and Eclipse systems, the extended system as discussed herein will sometimes be referred to as the "Eagle" system. In the Eagle system, for example, the logical address space can be as high as 4 gigabytes (more accurately the prefix "giga" is 1,073,741,824, or $2^{30}$, so that 4 gigabytes is, more accurately, 4,294,967,296) where a byte is defined as having 8 bits of precision. As used hereinafter, a "word" is defined as having 16 bits of precision (i.e. equivalent to 2 bytes) and a "double-word" as having 32 bits of precision (equal to two words, or four bytes). Because of the increased logical address space the overall system is able to support an instruction set which is larger than that supported by a Nova system or an Eclipse system having, for example, a much smaller logical address space. The overall capability of the system can be best understood by those in the art by examination of the set of the extended instructions which are capable of being performed by the system. The complete instruction set for the computer described herein is set forth in the last publication listed in Appendix A and available from Data General Corporation. The particular instructions which are of interest to the subject matter of the invention are set forth in Appendix B

incorporated as a part of this specification. Such instruction set includes the extended instruction set (which can be referred to as the Eagle instruction set) and the Eclipse C-350 instruction set, as well as the Nova instruction set, all of which are capable of being handled by the system, the latter two instruction sets being already disclosed as part of the above publications. All Nova and Eclipse instructions are executed according to the principles and specifications presented in the above-referenced publications.

The binary encodings of the extended instructions which are supported by the system of the invention are shown in Appendix B. A significant difference exists between the systems having extended instructions in accordance with the invention and systems having extended instructions which have been suggested by others. In any system in which an extended instruction set effectively represents a "super" set of a previous, or original, set of instructions, all of the instructions must be suitably decoded for machine operations. Normally, such systems utilize a decoding sub-system for decoding both the original instruction set and for decoding the extended instruction set. The decoder operates so as to permit the decoding of only one of the instruction sets at a time, the original instruction set and the extended instruction set being in effect, mutually exclusive. In order to determine which instruction is to be decoded, a unique instruction must be used to set a "mode bit", i.e., a single bit which in one state indicates that the original instruction set is to be decoded and in the other state indicates that the extended instruction set is to be decoded. However, in neither case can the decoding subsystem be made available to decode either of the both sets simultaneously. Such approach inserts a limitation on the overall machine operation since it is never possible to simultaneously decode instructions from different instruction sets of an overall super set thereof.

The system of the invention, however, avoids such mutual exclusivity and is arranged to be capable of decoding instructions from either set or both sets at any one time. A decoder PROM (programmable read-only-memory) system is utilized for decoding both the extended Eagle instruction set and the original or basic instruction sets as, for example, the original Nova and Eclipse instruction set. Each instruction to be decoded includes the information which determines which decoder is to be utilized, such determination thereby being inherently carried in each instruction word which is to be decoded. As seen in Appendix B, for example, the information is contained in bits $\emptyset$ and 12-15. Thus, in the extended Eagle instruction set, bit $\emptyset$ is always a "1" while bits 12-15 are always "1001" for all instructions of the extended instruction set except for those extended instructions which use a "1" in bit $\emptyset$ and the encoding "011000" in bits 10-15 and a "1" in bit "0", a "0" in bit 5, and the encoding "111000" in bits 10-15. On the other hand, the original Eclipse instructions are such that bit $\emptyset$ is 0 and bits 12-15 are "1000". Further, in cases where the instruction does not carry either the Eagle coded bits or the Eclipse coded bits, such instruction is interpreted as a NOVA instruction.

Because each instruction carries with it an identification as to which instruction set the instruction belongs, the system operates to decode instructions on a non-mutually exclusive basis.

In order to support the extended operations of the system, the configuration thereof requires an augmentation of the registers which were previously available in the original system of which the new system is an extension. The following registers are utilized in the system and are discussed in more detail later with respect to the particular implementation described in connection with specific figures below.

The register set includes fixed point registers, floating point registers, stack management registers and memory management registers.

### Fixed Point Registers

The system includes four fixed point accumulators (ACC $\emptyset$-3), one program counter (PC) and one processor status register (PSR). Each of the accumulators has 32 bit precision which can accomodate (1) a 16 bit operand which can be sign extended to 32 bits; (2) a 15 bit address which can be zero extended to 28 bits, the higher order 3 bits of the program counter being appended thereto together with a zero bit, all of which can be appended for storage in the accumulator; or (3) an 8 bit byte which can be zero extended to 32 bits before storage in the accumulator.

The program counter has 31 bits of precision, bits 1-3 identifying one of 8 current memory rings (discussed in more detail below) and bits 4-31 of which accomodate an address offset for instruction addresses. For Eclipse operation, for example, which normally requires only a 15 bit program counter, the bits 1-3 identify the current memory ring as in a 31 bit extended operation while the 15 least significant bits 17-31 represent the 15 bit Eclipse program counter and bits 4-16 are all zeros.

The processor status register is a 16 bit register which provides an overflow mask bit which if set will result in a fixed point overflow. Additionally the register includes a fixed point overflow indicator bit and a bit which indicates that a micro interrupt has occurred. Other bits in the register are reserved and are thus available for potential future use.

Floating Point Registers

The system includes four floating point accumulators (FPAC ∅-3) and one floating point status register (FPSR). Each of the floating point accumulators contains 64 bits of precision which is sufficient to wholly contain a double precision floating point value. The floating point registers of the extended system are identical to the Eclipse floating point accumulators (FPAC) which are discussed in the aforementioned publications.

The floating point status register also has 64 bits of precision, 32 bits of which act as the floating point program counter. In the event of a floating point fault the floating point program counter bits define the address of the floating point instruction that caused the fault. Four other bits are utilized, respectively, to indicate an exponent overflow condition, an exponent underflow condition,

a divide-by-zero condition and a mantissa overflow condition. Another counter bit will result in a floating point fault if any of the above latter four bits are also set. The floating point counter also includes a zero bit and negative bit, as are generally used in status registers, as well as bits for indicating a floating point rounding mode of operation and an interrupt resume operations.

Stack Management Registers

The system of the invention utilizes four 32 bit registers to manage the memory stack, which registers include a stack pointer, a stack limit, a stack base, and a frame pointer. The stack pointer register references the double word entry at the top of the stack. When a "push" operation occurs, all the bits of the stack pointer are incremented by 2 and the "pushed" object is placed in the double word addressed by the new value of the stack pointer. In a "pop" operation the double word addressed by the current value of the stack pointer is placed in a designated register and all 32 bits of the stack pointer are then decremented by 2.

The frame pointer register references the first available double word minus two in the current frame. The stack limit contains an address that is used to determine stack overflow. After any stack operation pushes objects onto the stack, the stack pointer is compared to the stack limit. If the stack pointer is greater than the stack limit a stack fault is signaled. The stack base contains an address that is used to determine the stack underflow. After any stack operation that pops objects from the stack, the stack pointer is compared to the stack base. If the stack pointer is less than the stack base a stack fault is signaled.

## Memory Management Registers

Eight registers are used to manage memory, such registers each being designated as a segment base register (SBR) having 32 bits of precision, the memory being divided into eight segments, or rings, thereof. The SBR's in the system described herein are formed as part of scratch pad registers on an address translation unit (ATU) of the system, as discussed in more detail below. One bit of each SBR indicates whether or not the segment associated therewith can be referenced (i.e. is there a valid or an invalid reference to such segment). Another bit indicates the maximum length of the segment offset field i.e. whether or not the reference is a one level page table or a two level page table, as explained in more detail below. A third bit of each segment base register indicates whether a Nova/Eclipse instruction for loading an effective address of a Nova/Eclipse I/0 instruction is being executed. Another bit represents a "protection" bit which indicates whether or not an I/0 instruction can be executed or whether the execution thereof would be a violation of the protection granted to such segment. Nineteen of the bits contain a physical address which identifies the physical address in the memory of the indicated page table. Discussions of the addressing of page tables in the memory are presented in more detail below including a discussion of the memory locations in each segment.

Overall System

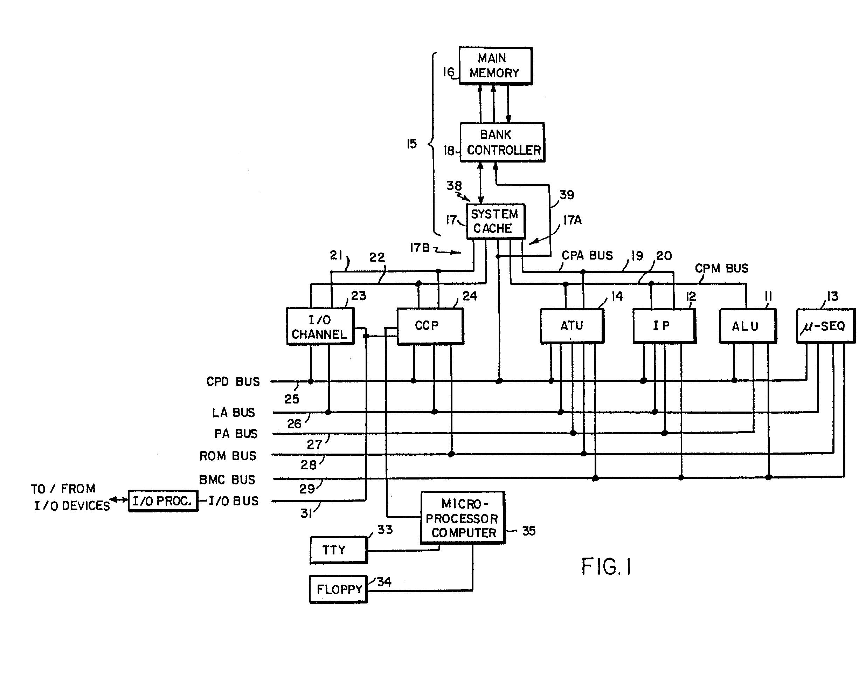

A block diagram of a preferred embodiment of the invention is shown in FIG. 1. The central processor portion of the system comprises an arithmetic logic unit (ALU) 11, an instruction processor unit 12, a micro-sequencer unit 13 and an address translation unit (ATU) 14. The memory system includes a main memory unit 16, an auxiliary cache memory unit 17 and a memory control unit identified as bank controller unit 18. A central processor address bus 19 permits the transfer of addresses among the instruction processor unit 12, the address translation unit 14 and the memory system. A control processor, memory (CPM) bus 20 permits the transfer of instructions and operands among arithmetic logic unit 11, instruction processor unit 12, address translation unit 14 and the memory system 15.

I/O address bus 21 and I/O memory/data bus 22 permit the transfers of addresses and data respectively with respect to I/O devices via I/O channel unit 23, as well as the transfers thereof between the memory system and a console control processor unit 24. Suitable control buses for the transfer of control signals among the various units of the overall system are provided as buses 25-31 described in more detail below. Appropriate teletype and floppy disc.systems 33 and 34, respectively, can be utilized with the system, particularly in the diagnostics mode of operation via console control processor unit 24 by way of a suitable micro processor computer 35.

The inventive aspects of the system to be described herein require a more detailed discussion of the memory system, the address translation unit, the instruction processor unit and the micro sequencer unit. The arithmetic logic unit, the console control processor unit and the I/O channel unit with their associated controls need not be described in detail.

Memory System

In accordance with a preferred embodiment of the invention the memory system comprises up to two megabytes of main memory 16 and, if desired, the system can be expanded even further as, for example, to 4 megabytes. It should be noted that sufficient bits are reserved in the physical address fields so as to allow for system expansion to one billion bytes of memory. The interface between the main memory unit 16 and the remainder of the system is via the dual port cache memory unit 17, data being transferred between the main memory and the cache memory unit in blocks of 16 bytes. The cache memory unit herein will usually be referred to as the "system cache" (SYS CACHE) to distinguish it from a separate cache memory in the instruction processor unit which latter memory will normally be referred to as the "instruction cache" (I CACHE) unit. The system cache unit 17 services CPU requests for data transfers on port 17A of its two ports and services requests from the I/O system at port 17B thereof. CPU data transfers can include "byte-aligned-byte" transfers, "word-aligned-word-" transfers, and double word transfers. I/O data transfers can include "word-aligned-word" transfers, "double word-aligned-double word" transfers and 16 byte block transfers.

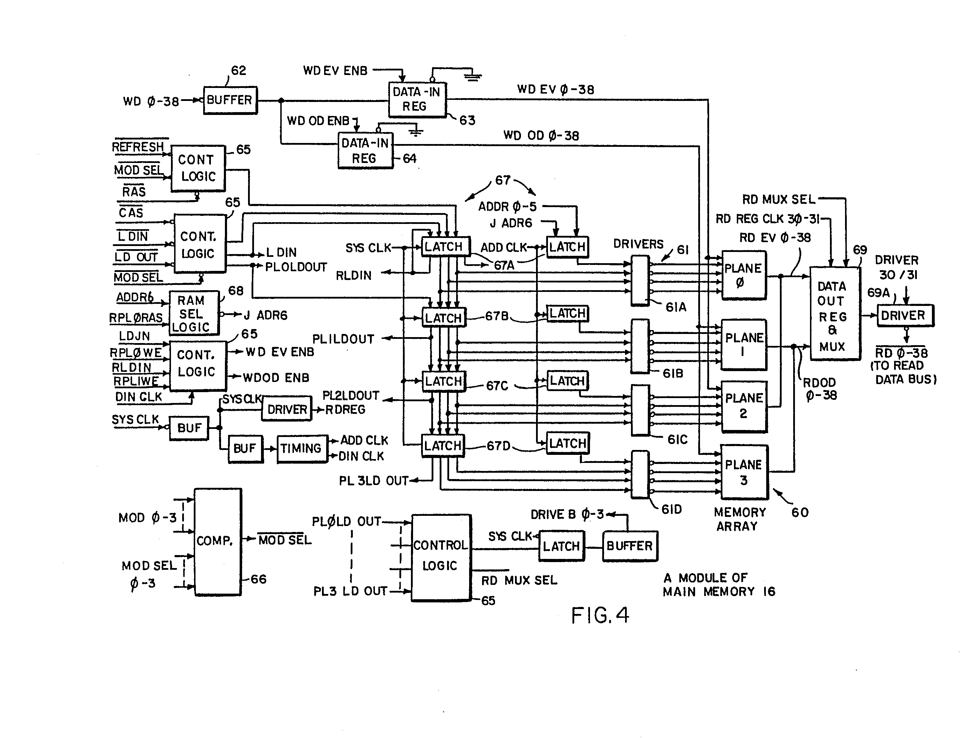

The main memory unit 16 can include from one to eight 256-kilobyte memory modules, as shown in FIG.4. Each memory module contains a memory array of 156 16 K dynamic random access memories (RAMs), organized at each module in the form of four planes ∅-3 of 16K 39-bit words each. Each word comprises 32 bits of data and 7 error correction bits, as discussed in more detail below. Memory timing and control for the RAMs of each memory module is accomplished on the memory bank controller board 18. The control signals from the memory bank controller are clocked into a register on each memory module, the outputs thereof driving the "plane-∅" RAMs. The outputs from such reigister are clocked a fixed time later into another register which drives the "plane-1" RAMs. Such pipe line operation continues through "plane-2" RAMs and "plane-3" RAMs so that all four planes receive the same control signals at fixed intervals (e.g. 110 nanosecond intervals), resulting in the transfer of a block of four consecutive 39-bit words.

Memory bank controller 18 has three main functions. First of all, it provides an interface between the system cache 17 and the memory modules of the main memory unit 16. Secondly, it performs necessary error checking and correction operation and, thirdly, it controls the refresh operation of the dynamic RAMs on each of the memory modules. The details of the interface between the system cache and the bank controller are discussed in more detail below.

The error checking and correction logic on the bank controller performs single-bit error correction and double-bit error detection using a 7 bit error correction Hamming code as is well known in the art. The 7 check bits generated for each 32 bit data word are stored with such word in the main memory modules. When the word is subsequently read from memory, all 39 bits are decoded to produce a 7 bit pattern of syndrome bits which pattern identifies which, if any, single bit is in error and indicates when more than one bit is in error. When a correctable single-bit occurs, the console control processor 24 is provided with the address and the syndrome bit pattern of the failing bit. The data is thereupon corrected and sent to the system cache after a fixed time delay equal to a system clock period, e.g. 110 nanoseconds in a particular embodiment, in accordance with well-known error correcting operation, the remaining words in the pipe line operation being prevented from transfer until the corrected signal is made available by the use of a suitable inhibit signal identified as the BC ERROR signal.

Substantially immediate correction of single bit errors is desirable so that such errors do not grow into multiple bit errors. A conventional technique can be used in which the corrected data is written back into memory only when it has been read and found to be in error. Two problems arise with such a technique. First of all, the memory locations which are not often read are not often corrected and, secondly, significant time can be wasted in trying to correct a failure if it occurs in a frequently accessed memory location. The system of the invention can avoid such problems by utilizing a separate process for monitoring all of the main memory locations so that each location therein is checked and corrected, if necessary, once every two seconds. Such checking is performed during the memory refresh cycle and does not reduce the availability of the memory to the system. A detailed description of such a technique is disclosed in U.S. Patent Application, Serial No. 1 43 675 and our corresponding British Patent Application 8112082 (Published under Serial No 2 075 730).

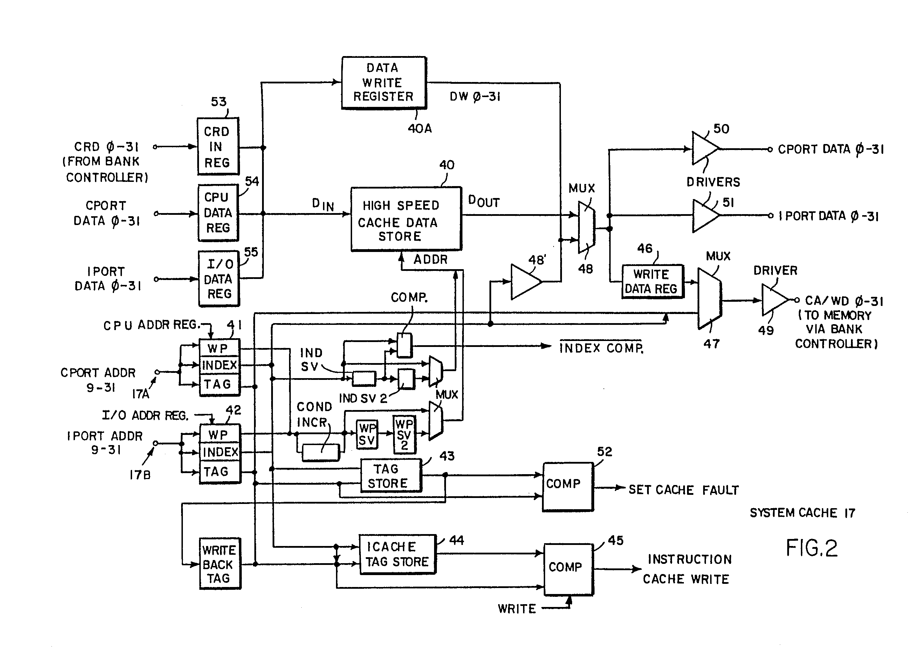

The system cache unit 17 represents the sole connection between the main memory unit 16 and the remainder of the system and consists of a memory system port 38 for connection to the main memory and two requestor ports, 17A and 17B, as discussed above, one intended primarily for handling CPU requests and one intended primarily for handling I/O requests. The system cache board also provides a direct access path 39 between the I/O port and the memory system port providing for direct block transfers therebetween. Cache board 17 also includes a 16-kilobyte, direct mapped high speed cache data store 40 having a block size of 16 bytes which can be accessed from either the I/O or the CPU requestor port. Block diagrams of the logic utilized in the system cache unit 17, the bank controller unit 18 and a typical memory module of the main memory unit 16 are shown in FIGS. 2,3, and 4.

.As can be seen in FIG. 2, the system cache data store 40 receives all requests for data from the memory other than block transfer requests from the I/O port which are serviced by the main memory directly.  In the particular embodiment described, the cache data store receives the data address at the address input of either CPORT 17A or IPORT 17B which address is placed in either CPORT address register 41 or IPORT address register 42.  The incoming address includes a Tag portion, an Index portion and a word pointer portion as follows:

| 9 | 18 19 | 28 29 31 |
|---|-------|----------|
| TAG · | INDEX | WP |

The three least significant bits 29-31 of the cache data store address specify the word pointer, which identifies the desired word within a block of the 16 byte 8 word block of the data store.  The remaining bits 9-28 identify the block address which corresponds exactly to the address which would be used to fetch the desired block from the main memory.  The latter bits are divided into Tag bits 9-18 and Index bits 19-28 as shown.

The system cache as depicted in FIG.2 includes a "Tag" Store Unit 43.  Data store 40 is a high speed memory array of 4K x 32 bit words (i.e. 1K 16-byte blocks) and holds a copy of a block of words from main memory.  The data store is addressed by the index and word pointer bits of the cache data store address word, the index being a 10-bit address of a block within the data store 40 and the three word pointer bits pointing to the desired word within the selected block, as mentioned above. A data store block may be used to buffer any data block of main memory which shares the same index.

The function of the Tag store 43 is to identify which of the many possible blocks from the main memory is buffered in each 16 byte block of the data store 40. Tag store 43 is a high speed array of 1K 12-bit words and is addressed by the 10-bit index portion of the memory address. Each 12-bit word contains ten bits which identify the block from the main memory which is buffered in data store 40. When the main memory is 4 megabytes or less, the first two bits of this tag are needed only for future expansion of the main memory capacity and can be zero. Bits 10 and 11 are flags to indicate the status of the data. Thus a "valid" flag V indicates that the indentifiable data store block contains valid data. For example, if an I/O port operation were to request a block "write" to main memory which modifies the contents of a block which has already been buffered in the data store 40, the valid flag of that block would be reset to indicate that its data is no longer valid.

A "modify" flag M indicates that the contents of the data store block have been modified. Thus, if a data block is removed from the data store 40 to make room for a new data block from main memory, the removed data block is written back to main memory if the modified data flag is set.

A second tag store unit 44 is shown on the system cache board, which latter tag store is a replica of the instruction cache (ICACHE) tag store which is described later. The ICACHE tag store is used on the system cache board to determine when a write to memory would affect the contents of the instruction cache at the instruction processor. When such an effect would occur, as indicated by a comparison at comparator 45 of the incoming address and the ICACHE addresses, the system cache alerts the instruction processor by asserting an "instruction cache write" signal, as indicated in FIG. 2, to inform the instruction cache (ICACHE) at the instruction processor board of the location of the block which has been so modified.

In the operation of the system cache all requests are initially assumed to be "read" requests, since even when a "write" request occurs it is possible that the data to be written will need to be read and modified (a "read-modify-write" operation) before the write operation is to be performed. If the system cache is not busy when a request is received at an input port, the data store 40 and the tag store 43 are accessed simultaneously, using the appropriate portions of the received input address as discussed above. The data from the location in the data store 40 which has been addressed is loaded into the cache write data register 46 via multiplexer 48 if the data transfer is a write into memory operation so that in the next cycle the contents of the write data register 46 can be enabled onto the bus via multiplexer 47 and bus driver unit 49. If the data is a read operation the data output from data store 40 is supplied at the CPORT or IPORT, as required, via multiplexer 48 and driver units 50 and 51, respectively.

The data from the tag store 43 is first examined to determine if the requested data, is, in fact, in the data store 40. The tag portion of the word which is read from the tag store is compared at comparator 52 with the tag portion of the address which has been submitted by the requestor and the valid flag checked to see that it is set. If such comparison is successful (a system cache "hit") the data from data store 40 is the desired data and the requestor is permitted to receive it or to write it into memory. If the comparison fails (a system cache "miss") the data block which has been requested is not in the cache data store 40 and must be brought in from the main memory. Such an occurrence is termed a "cache fault" condition and, when such fault occurs, the requestor is prevented from loading in data until after the fault is resolved.

Once the data is available for the requestor the requestor must signal that it wishes to accept the data and, if the requestor does not do so when the data first becomes available, the read operation will be repeated until the requestor indicates its willingness to accept the data.

Because access to the data in data store 40 requires two system clock cycles to complete, the cache addresses as received from requestors can be "pipe-lined" in a manner such that two accesses can be in progress at any one time. Advantage is taken of this ability to pipe-line access requests by intertwining the accessors of one of the input ports with those of the other input ports. An appropriate clocking signal, which has a frequency one-half that of the basic system clock, is used to indicate which requestor port is allowed to access the cache data store at any given time. As a result there is no interference between CPU and I/O port accesses except during a cache fault. The only exception is that both I/O and CPU ports are not allowed to be in the process of accessing the same data store block at the same time. An example of the intertwining operation between the ports for a read operation is discussed below. In the particular example described the CPU port requestor does not choose to take the data at the first opportunity so that a read repeat occurs.

|  | t0 | t1 | t2 | t3 | t4 | t5 |
|---|---|---|---|---|---|---|
| CPU PORT READ | Address and START Signal on bus. | Tag and Data Stores read. | Data ready. Requestor does not assert RT Signal. | Data Store read again. | Data Ready. Requestor asserts RT Signal and loads data. | |
| IO PORT READ | Idle cycle or end of last access. | Address and START Signal on bus. | Tag and Data Stores read. | Data ready. Requestor asserts RT Signal and loads data. | Idle cycle or start of next access. | |

For a cache write operation, the cache, at the time the memory write access is initiated, assumes that a read-modify-write operation will be performed and accordingly does a read as described above. However, even if the transfer is to be a simple write operation, the tag store information must be read to determine the location at which the incoming data will be written so that in actuality no time is lost in performing a superfluous data store read operation. For a simple write operation, or for the write portion of a read-modify-write operation, the requestor asserts a write transfer (WT) signal to indicate completion of the transfer. Instead of driving the data from the output register onto the memory port 38 the system cache loads an input register 53 with the data which is to be written from the data bus at the end of the cycle and writes it into the data store 40 during the next cycle. If a cache fault results from such a write request, the system cache accepts the data to be written into the input register

0150523

- 22 -

but does not write it into the data store 40 until after the fault is resolved. An example of a CPU port write request in a manner similar to that discussed above for a read request is shown below.

| | t0 | t1 | t2 | t3 | t4 | t5 |
|---|---|---|---|---|---|---|
| CPU PORT WRITE | Address and START and WRITE Signals on bus. | Tag and Data Stores read. | Data ready. Requestor asserts WT Signal and sends data. | Data Store written. | Idle cycle. | |
| IO PORT READ | Idle cycle or end of last access. | Address and START Signal on bus. | Tag and Data Stores read. | Data ready. Requestor asserts RT Signal and loads data. | Idle cycle or start of next access. | |

The examples discussed above show single read or single write operations. It is also possible for a requestor to submit a new address and a START signal along with the read transfer (RT) and/or write transfer (WT) signal, so that consecutive read operations or consecutive write operations from a single port can be performed every two cache cycles (a CPU cycle, for example, is equivalent to two cache cycles) unless a cache fault occurs. However, if a read access is initiated at the same time that a write transfer is performed, the data store 40 cannot be read on the next cycle because it is being written into at that time. When this condition happens, the read operation requires an additional two cache cycles for completion. If the requestor is aware that a read operation is following a write transfer and wishes to avoid a wasted cycle, the requestor can either delay starting the read request until the next cycle or it may start the read request to wait an extra cycle before requesting the data transfer. In either case useful work could be done in the otherwise wasted cycle, although initiation of a read followed by a wait for an extra cycle is usually more desirable because it allows a cache fault to be detected at an earlier point in time.

A read-modify-write operation can be accomplished by asserting a START signal and WRITE signal along with the address, followed by a read transfer at a later cycle and a write transfer at a still later cycle. When a WRITE signal is signaled at the start of an access, the system cache will not consider that the access has been completed until a write transfer is performed. During such operation all other requestors are prohibited from accessing the same data. Thus, requestors utilizing the same input port are prevented from access by the fact that the first requestor controls the bus during the entire read-modify-write operation. Requestors on the other port are prevented from access by the fact that both ports are prohibited from accessing the same data store block at the same time. Such prohibition also prevents requestors at another port from removing a block of data from the cache data store when the system cache is in the middle of an operation.

If the system cache board receives a write transfer request when a write operation has not been previously indicated or, if it receives a read transfer and a write transfer request simultaneously, access to the system cache data store is aborted without the transfer of any data. If such simultaneous read and write transfer requests are asserted at the beginning of the next cycle after the START request, the access may be avoided without even initiating an unnecessary cache fault indication.

In addition to the above transfers, the system cache board has the capability of performing direct write transfers between the input ports and the main memory, the bulk of such data traffic being capable of being handled without affecting the contents of the cache data store 40. If the requested transfer is a block write transfer, the data is written directly into the main memory via data write register 40A, MUX 48 and write data register 46. Data transfers at the I/O port are not allowed when the CPU port is in the process of accessing data which has the same Index as the I/O block which is to be transferred. Data read-modify-write transfers are also not permitted by the system.

In the overall system cache block diagram shown in FIG. 2, the input registers for the CPU request port and the I/O request port are shown as data registers 54 and 55. Addresses associated with the data at such registers are supplied to the CPU address register 41 and the I/O address register 42, each address comprising the Index, Tag and Word Pointer as discussed above.

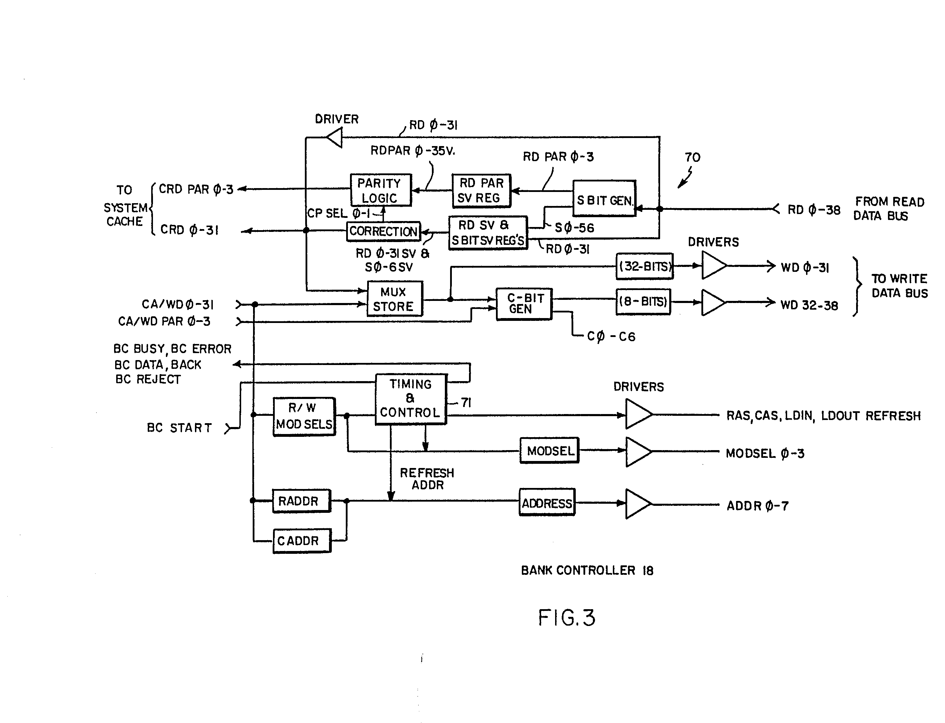

FIG.3 depicts an overall block diagram of the bank controller 18 which interfaces between the system cache at the left hand side of the drawing and the memory modules at the right hand side thereof. Words which are read from the memory modules, identified as RD $\emptyset$-38, including 7 parity bits, are supplied to the bank controller for transfer to the system cache, such words being identified as CRD $\emptyset$-31 in FIG 3, via the error correction logic 70 which also supplies four parity bits, identified as CRD PAR $\emptyset$-3. Address and data words which are to be written into the main memory modules are supplied from the system cache such words being identified as CA/WD $\emptyset$-31, together with the parity bits therefor, identified as CA/WD PAR $\emptyset$-3, the data being supplied to the write data bus for the memory modules as WD $\emptyset$-31 and parity bits WD 32-38 via error correction logic 70. The addresses therefor are supplied in the form of information which is required to select the desired memory module (MODSEL $\emptyset$-3) (to identify up to 16 modules) and to select the desired RAM within the selected module (ADDR$\emptyset$-7)

Further, the bank controller supplies the following control signals to the main memory which responds thereto as required. The RAS and CAS signals represent the row address and column address strobe signals for the RAM's of the main memory. The LDOUT signal causes the selected module to load its output register at the end of the current cycle and to enable the register to place the contents of the output register on the read data bus during the next cycle. The LDIN signal causes the selected module to accept data from the write bus during the next cycle and to write such data into the RAMs during the following cycle. The REFRESH signal overrides the module selection for the row address strobe (RAS) signal only. During a refresh operation one module is read normally and all others perform an RAS refresh only.

The bank controller also interfaces the system cache to supply 32-bit words (CRD $\emptyset$-31) to the cache along with 4 parity bits (CRD PAR $\emptyset$-3) for byte parity and to receive 32 bit address and data words (CA/WD $\emptyset$-31) from the cache along with byte parity bits (CA/WD PAR $\emptyset$=3). The bank controller also supplies the following control signals to the cache. The BC BUSY signal indicates that the bank controller is not able to accept a BC START (see below) request. The BC ERROR signal indicates that the data word placed on the read data bus during the last cycle contained a correctable error and must be replaced with the corrected word for the data which is on the bus during the current cycle. Once a BC ERROR signal has been asserted all subsequent words of the same block transfer are also passed through the error correction logic. Accordingly, BC ERROR need be asserted only once for each block transfer.

The BC DATABACK signal indicates that the first word of the four word block to be transferred will be at the read data bus in the next cycle. The BC REJECT signal indicates that the bank controller cannot accept the contents of the write data bus at the end of the current cycle. The BC START indicates that a bank controller transfer operation is to commence.

FIG. 4 depicts the overall block diagram for a typical memory module of the main memory system of the invention and shows the memory array 60 of dynamic NMOS random access memories (RAM's) organized as four planes of 16K 39-bit words each and identifiable as planes $\emptyset$-3.  A word which is to be written into the memory array is received from the bank controller as $\overline{WD\emptyset\text{-}38}$ via buffer 62.  Words being stored in even planes $\emptyset$ and 2 are stored in even plane data register 63 while words to be stored in odd planes 1 and 3 are stored in odd plane data register 64.  The control signals are supplied from the bank controller to control logic 65.  The module select code bits MOD SEL$\emptyset$-3 are supplied to a comparator 66 to provide a $\overline{MODSEL}$ signal if the particular module has been selected.  Control signals from control logic 65 are supplied to appropriate latching circuitry 67 to provide appropriate signals for controlling the operation of the memory array via drivers 61. The control signals from the memory bank controllers are first clocked into the plane $\emptyset$ latching registers 67A and the outputs thereof drive the plane $\emptyset$ RAMs via drivers 61A.  The outputs of the first latch register are those clocked at a fixed time period later into the next latch register set 67B which drives the plane 1 RAMs.  Such pipeline operation continues in order to drive the plane 2 and plane 3 RAMs such that all four RAM planes receive the same control signals at fixed intervals, resulting in the transfer of a block of four consecutive 39-bit words. While the RAM address from the bank controller includes eight bits, only seven bits of address are used for the 16K RAMs discussed above, the extra bit allowing for possible future expansion. Thus, addressed bits ADR $\emptyset$-5 are clocked at fixed intervals to each of the latches 67A-67D of the planes $\emptyset$-3 at fixed intervals. ADR 6 is supplied to RAM selection logic 68 together with the plane $\emptyset$ latch signal $\overline{RPL\ \emptyset\ RAS}$ to provide the JADR 6 signal for the plane $\emptyset$ latch register 67A. The RAS and CAS signals provide the necessary control signals via the control logic 65 and latch registers 67 for driving the row address strobe (RAS) and the column address strobe (CAS) signals for the RAMs.

The LDOUT signal to the input of control logic 65 causes the module to load its output register at the end of the current cycle and enable it onto the read data bus during the next cycle via the data out register and multiplexer logic 69 and read bus driver 69A. The LDIN signal at the input to control logic 65 causes the module to accept data from the write data bus via registers 63 and 64 for writing into the RAM during the following cycle. The following timing diagrams show the status of the various signals for block read and block write operations at each fixed time interval (in the particular embodiment described, for example, each cycle can be 110 ns). As can be seen, the plane $\emptyset$-3 data is provided in the read operation in sequence and the input data is written into such planes in sequence.

### Block Read

| | t0 | t1 | t2 | t3 | t4 | t5 | t6 | t7 |
|---|---|---|---|---|---|---|---|---|
| Control Signals | RAS MODSELS | RAS,CAS MODSELS | RAS,CAS MODSELS | LDOUT MODSELS | <pre-charge> | <next access> | | |
| Address Lines | ROW ADDRESS | COLUMN ADDRESS | COLUMN ADDRESS | | | | | |
| Read Data bus | | | | | | PLANE DATA | PLANE DATA. | <etc.> <etc.> |
| Write Data Bus | | | | | | | | |

### Block Write

| | t0 | t1 | t2 | t3 | t4 | t5 | t6 | t7 |
|---|---|---|---|---|---|---|---|---|
| Control Signals | RAS,LDN MODSELS | RAS,CAS MODSELS | RAS,CAS MODSELS | | | | <next access> | |
| Address Lines | ROW ADDRESS | COLUMN ADDRESS | COLUMN ADDRESS | | | | | |
| Read Data Bus | | | | | | | | |
| Write Data Bus | | PLANE 0 DATA | PLANE 1 DATA | PLANE 2 DATA | PLANE 3 DATA | | | |

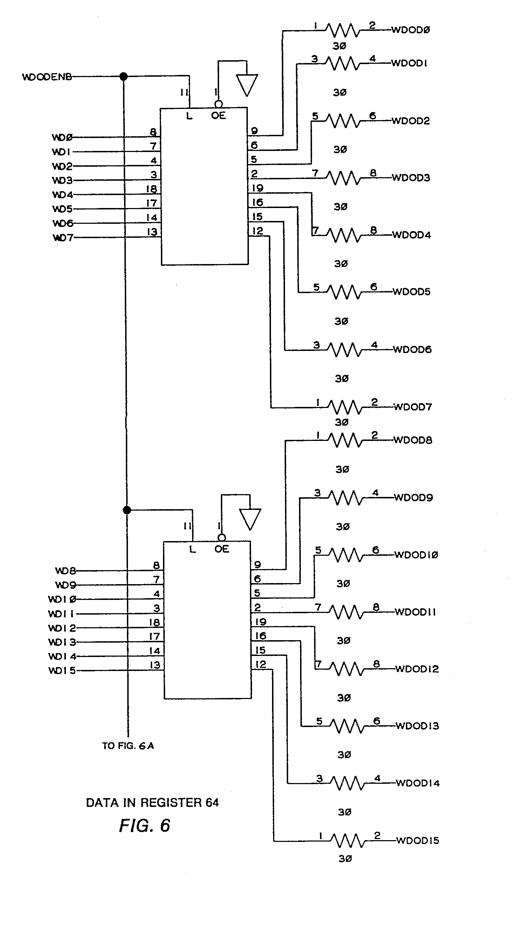

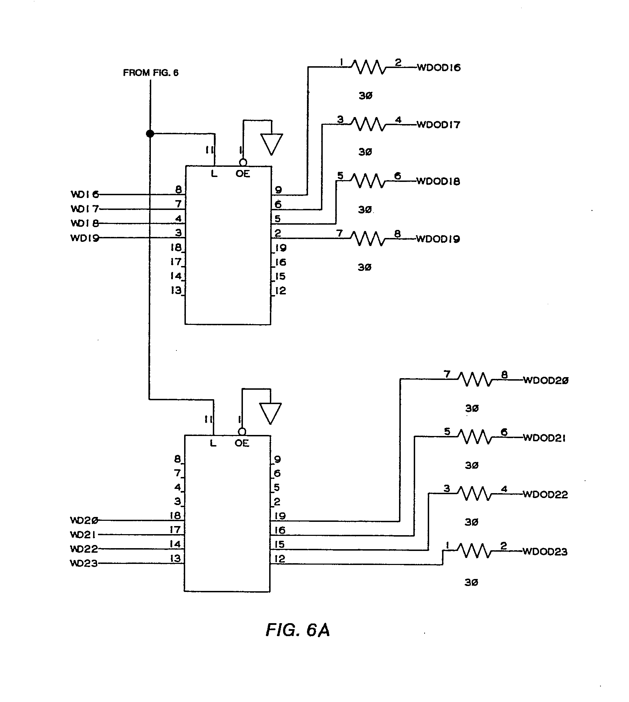

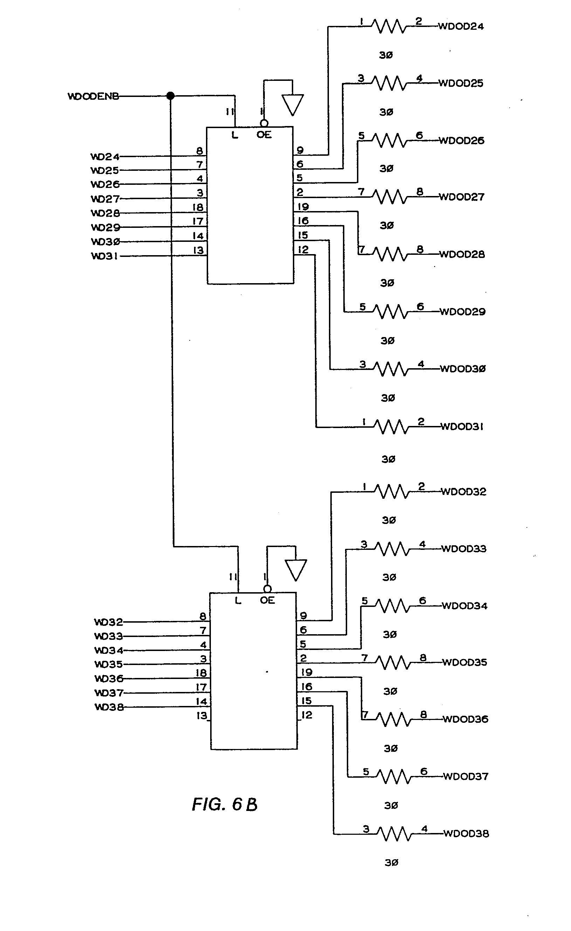

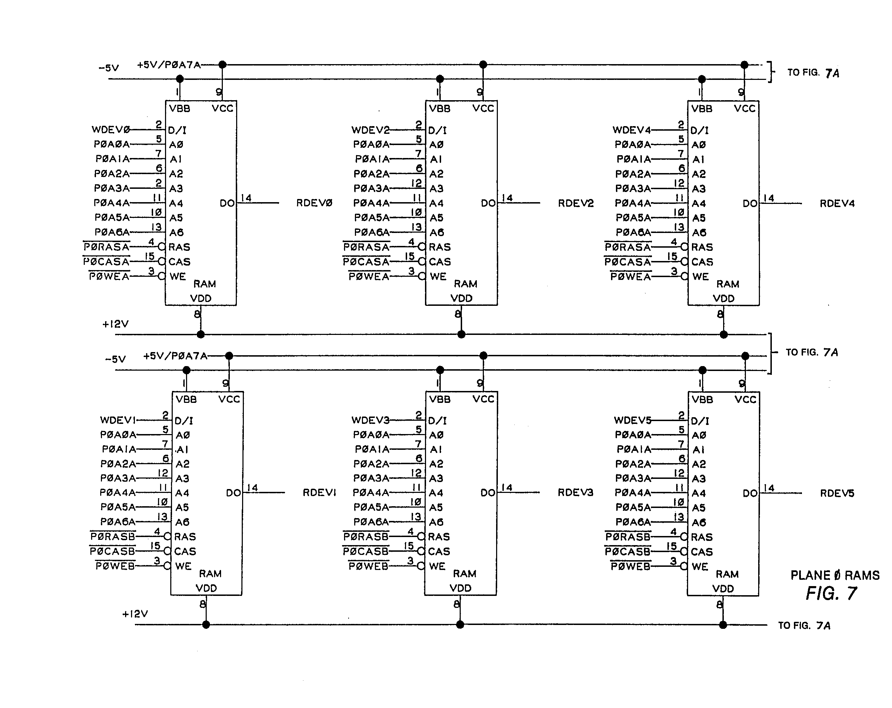

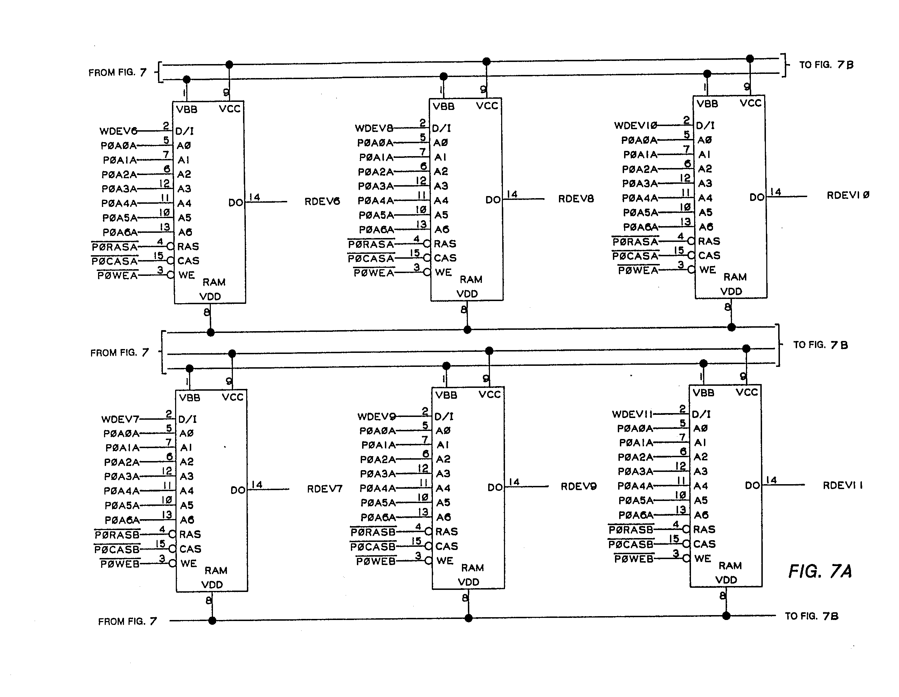

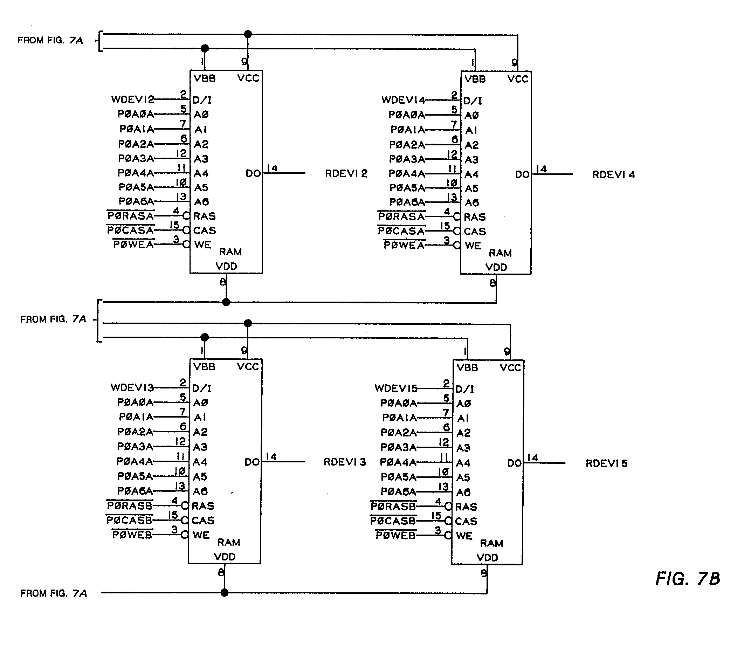

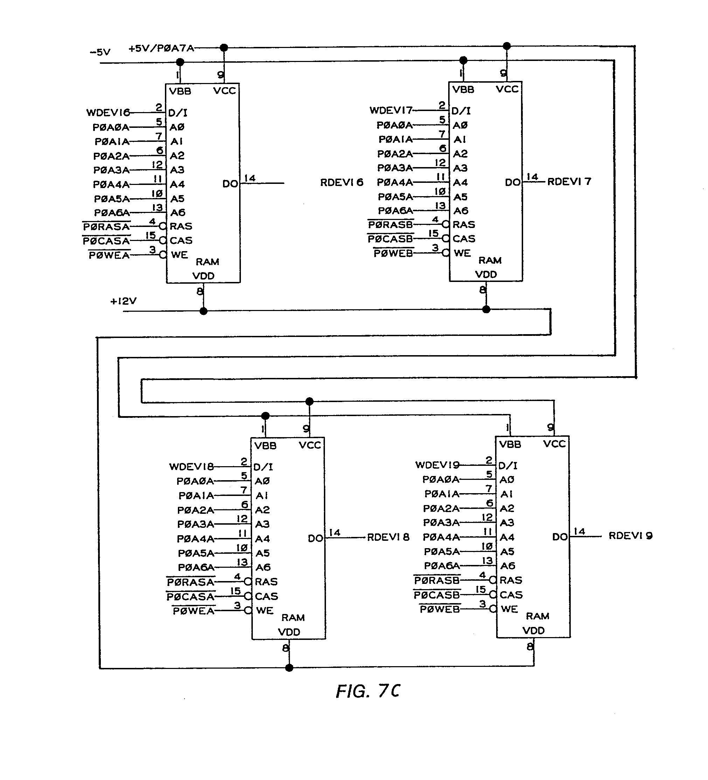

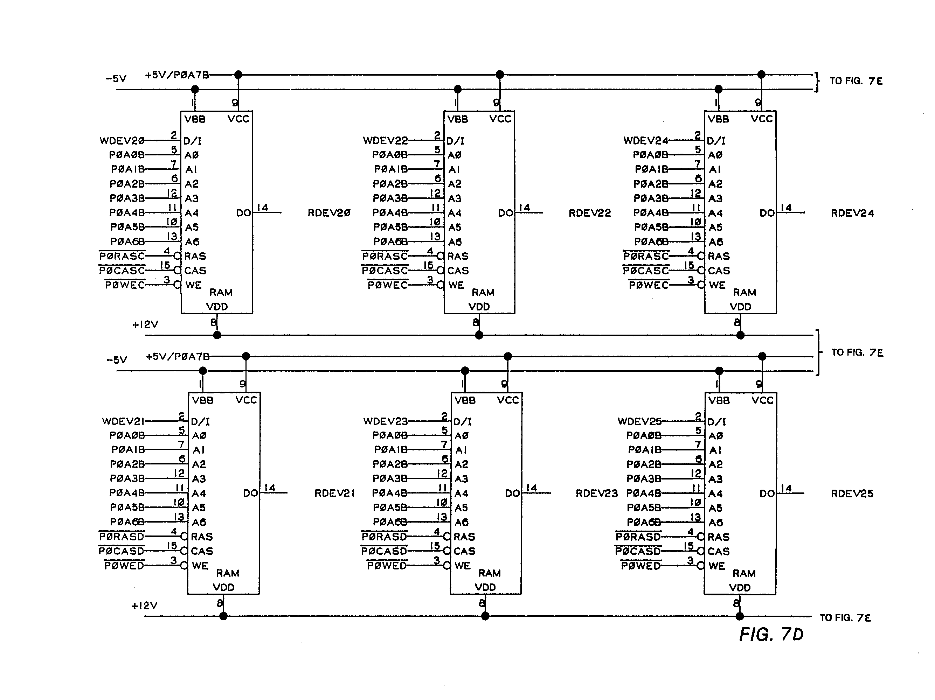

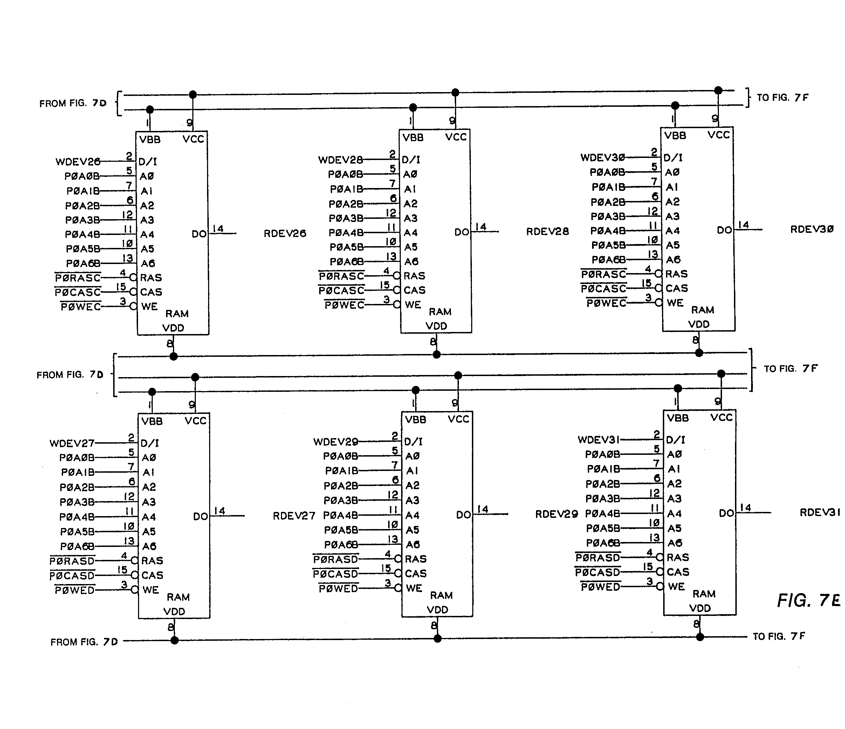

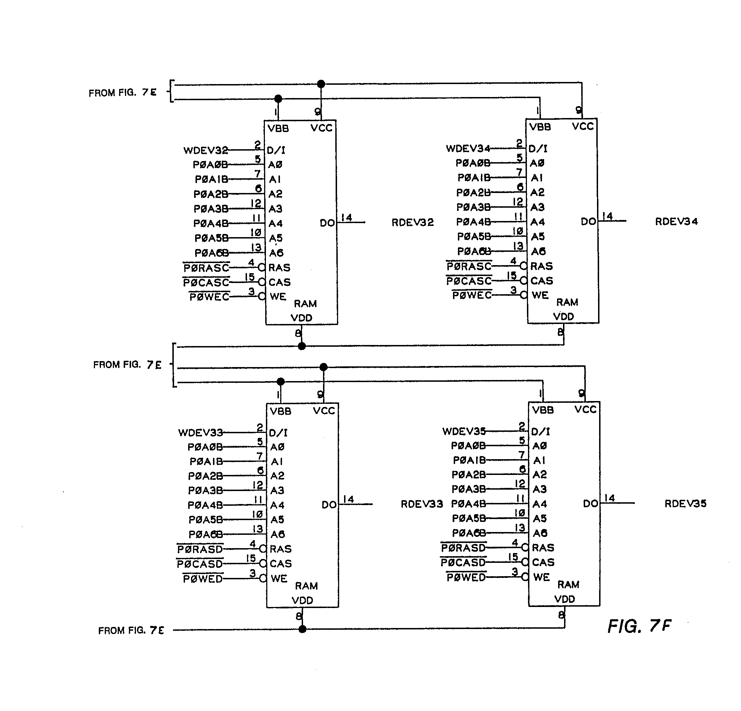

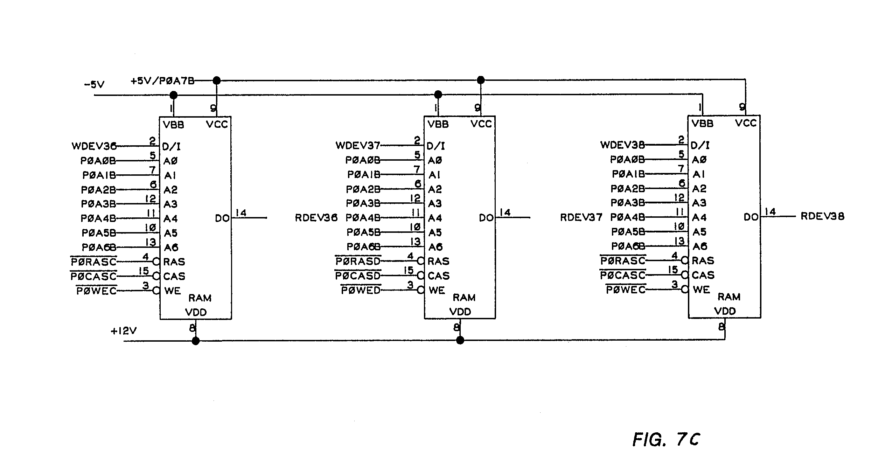

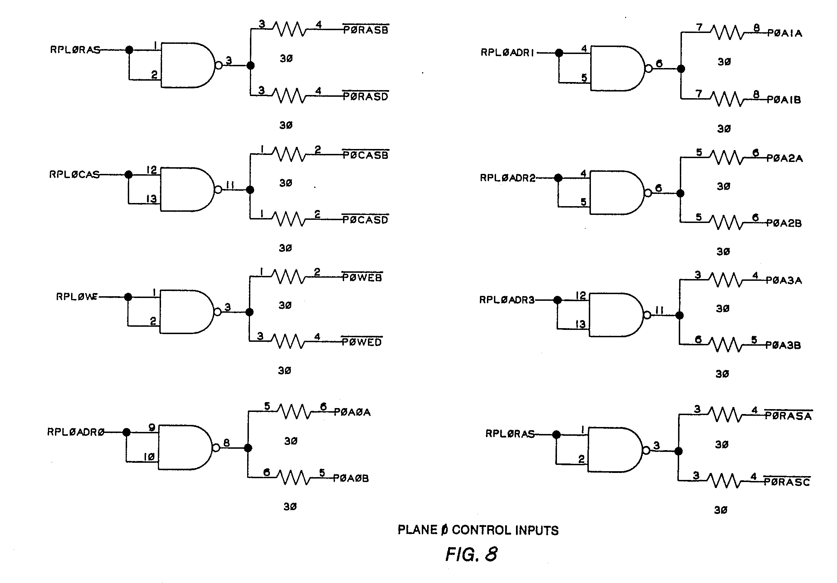

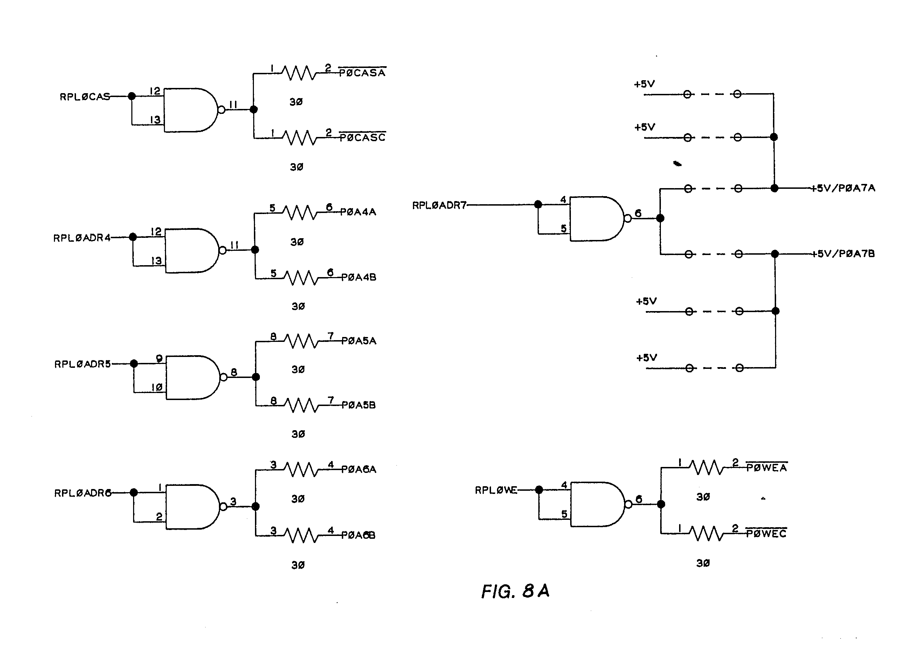

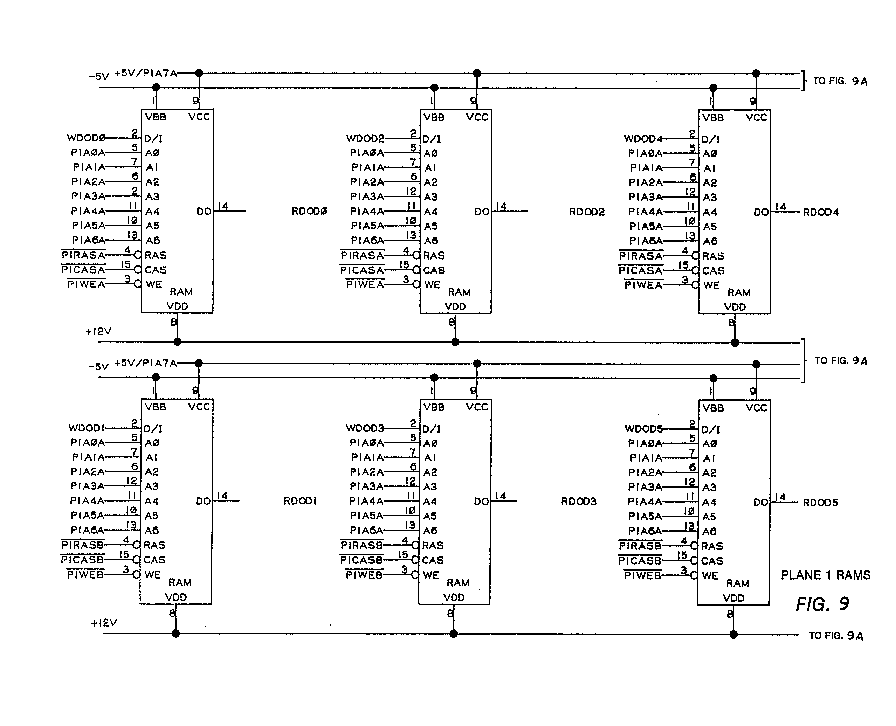

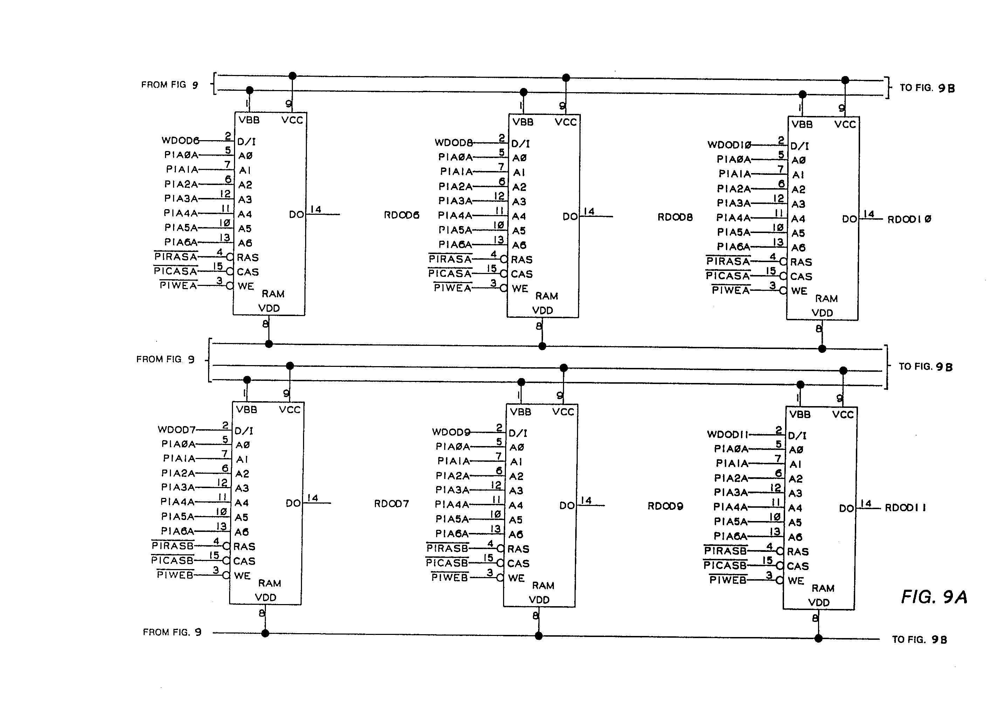

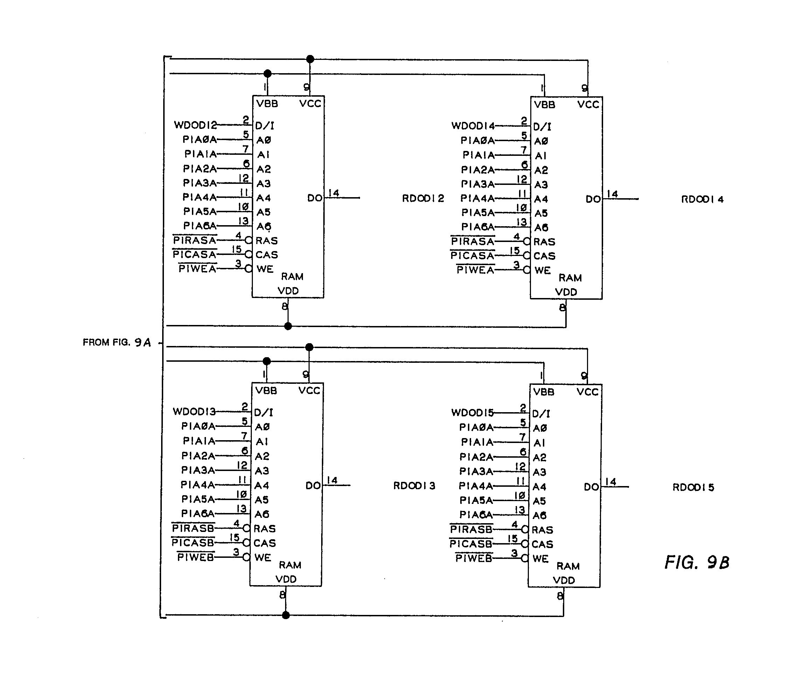

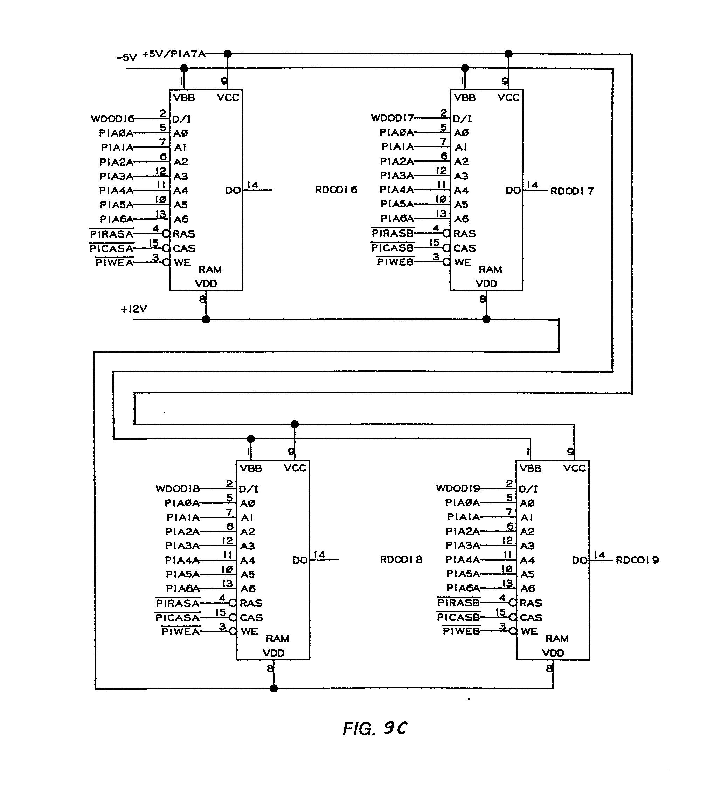

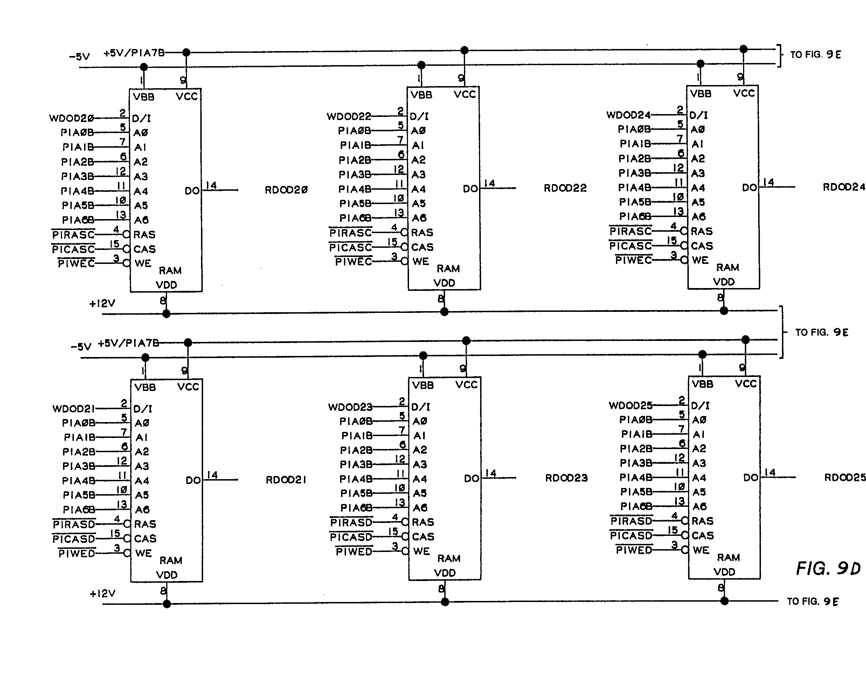

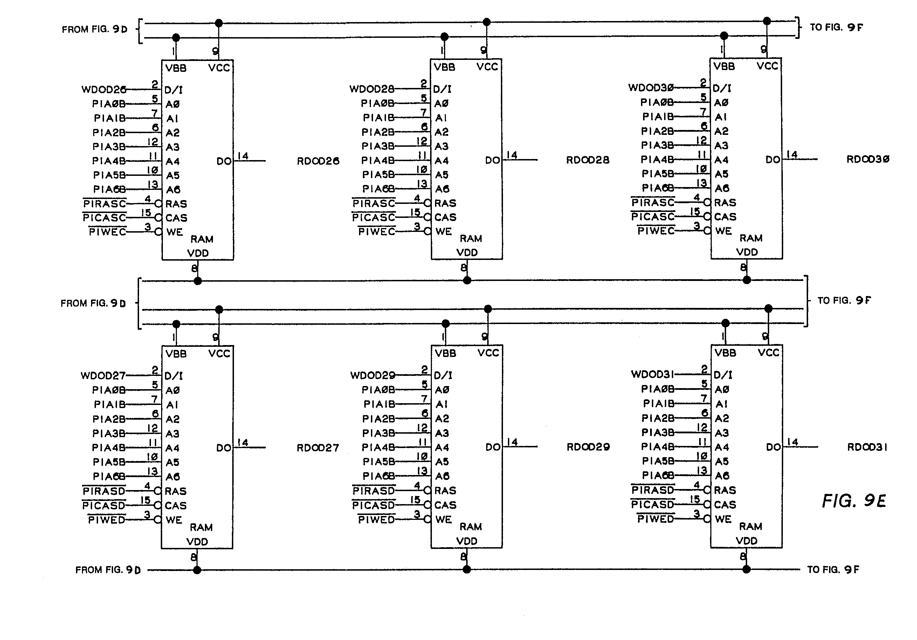

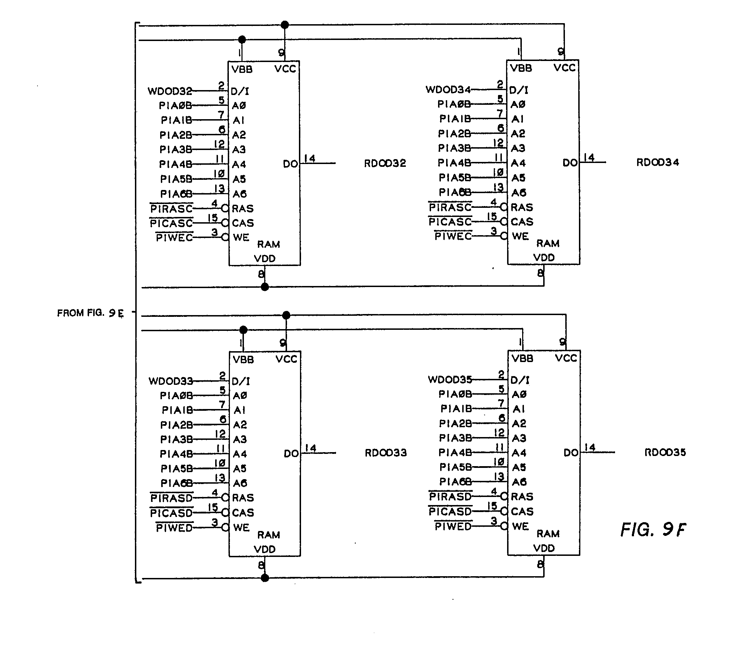

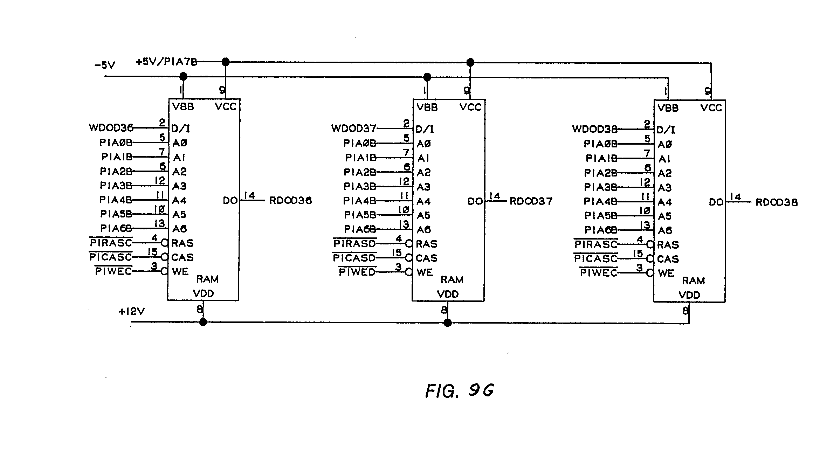

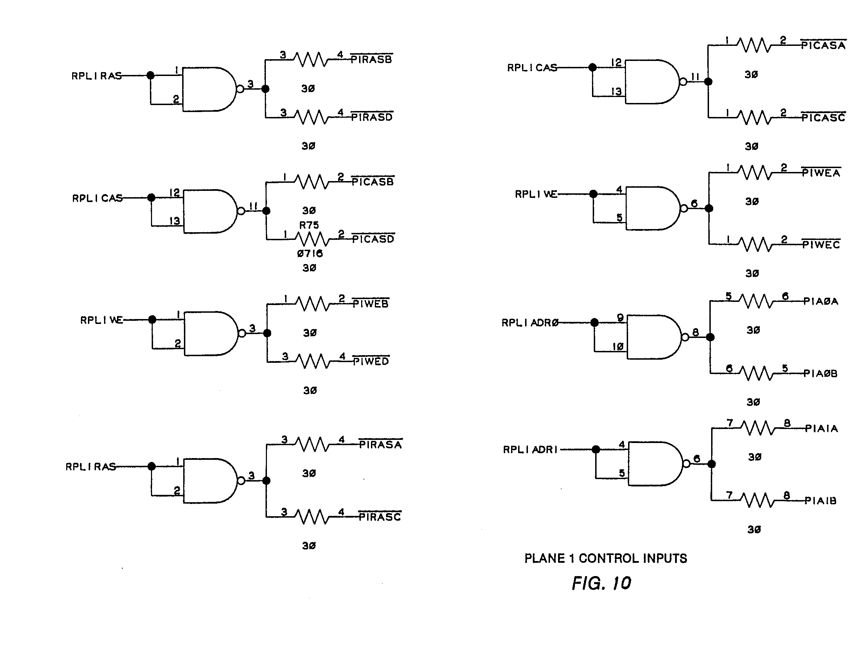

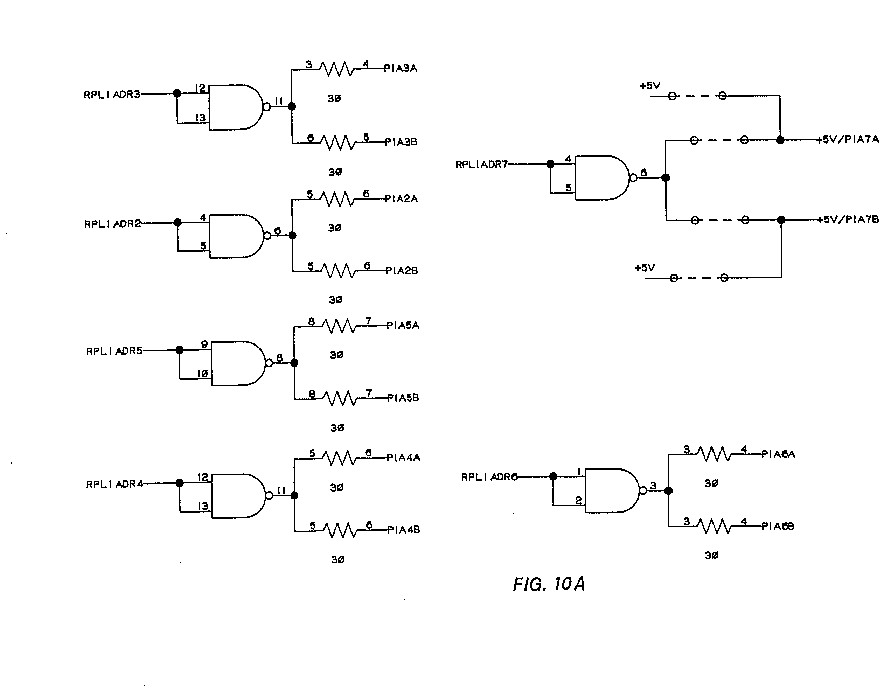

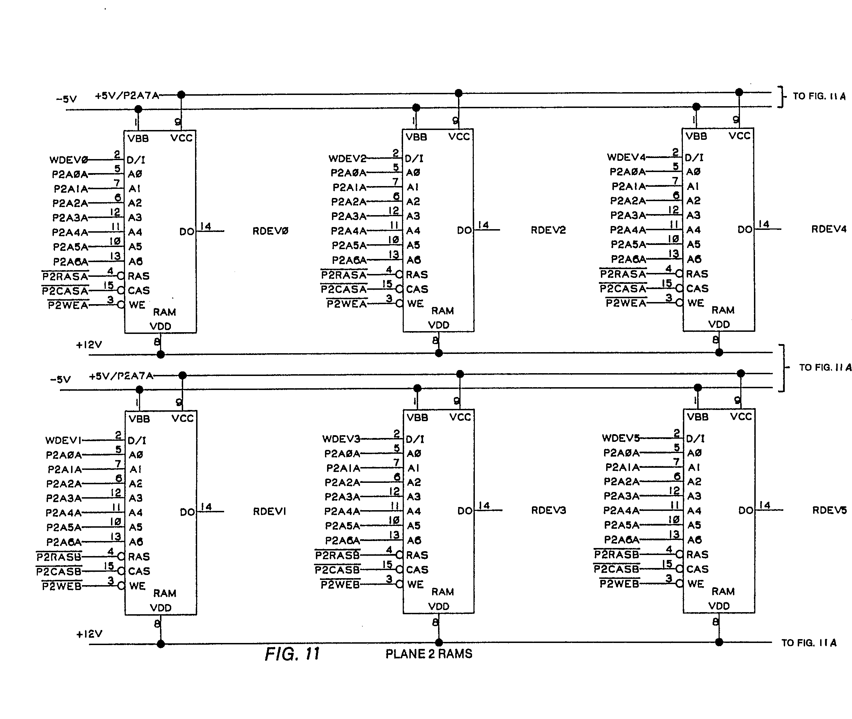

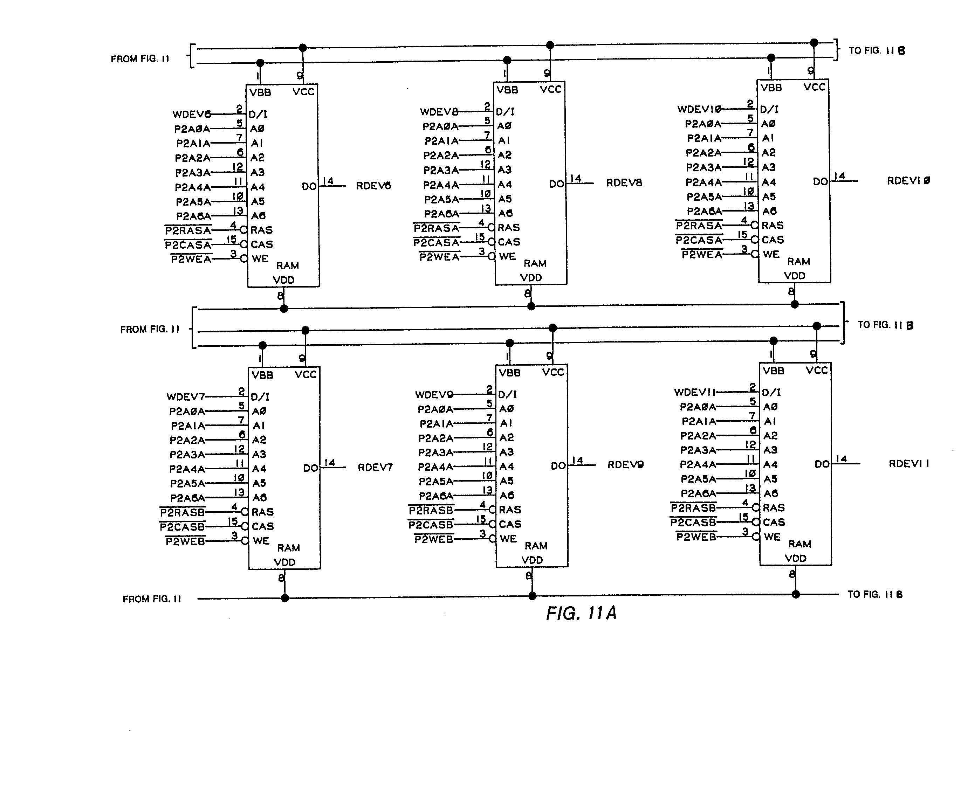

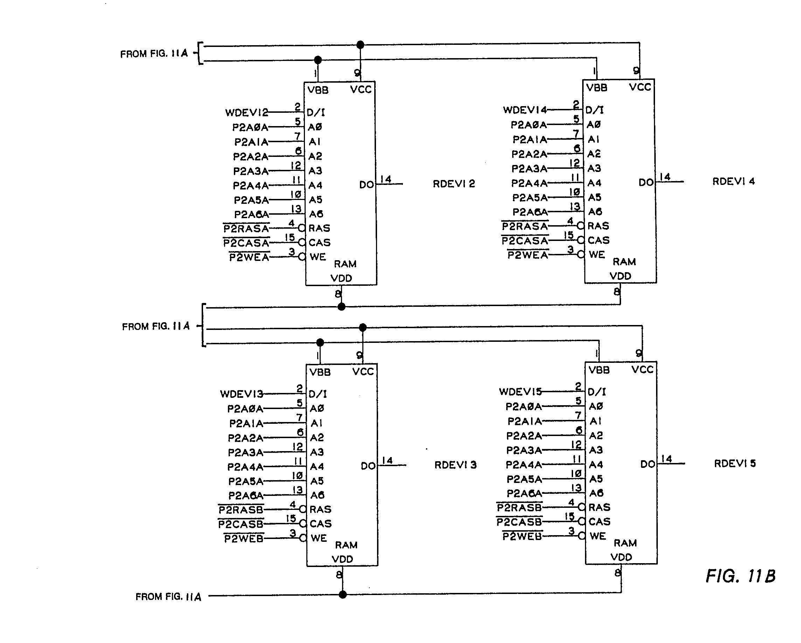

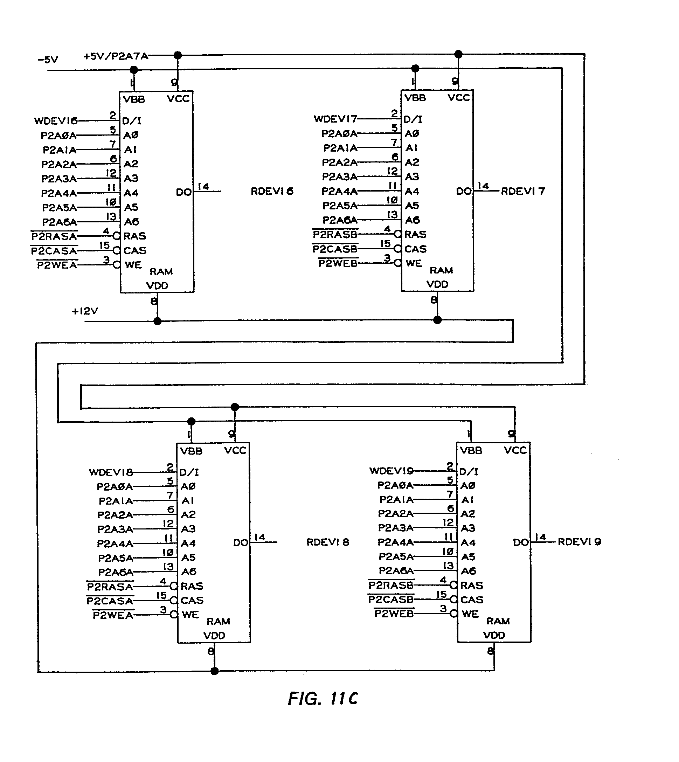

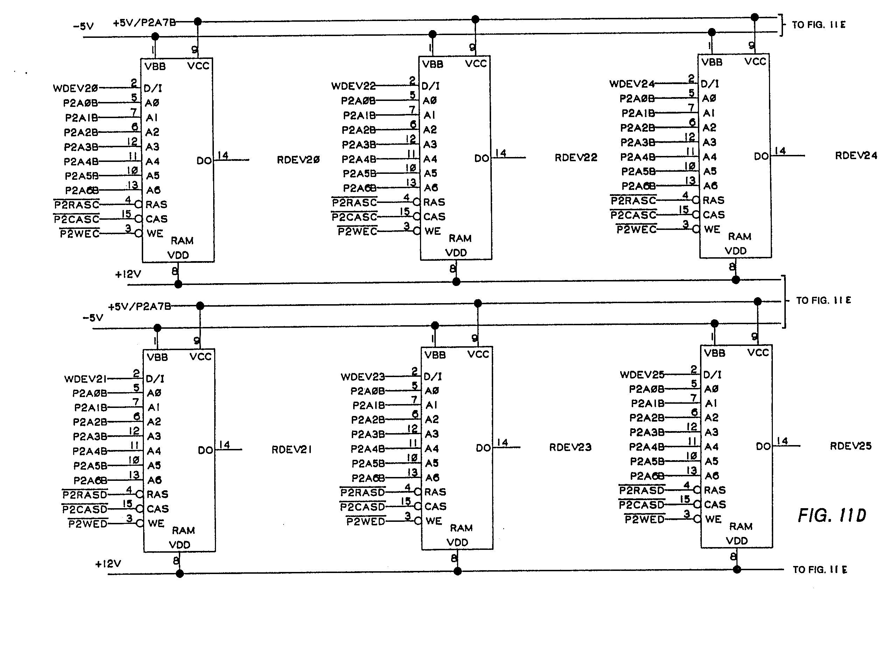

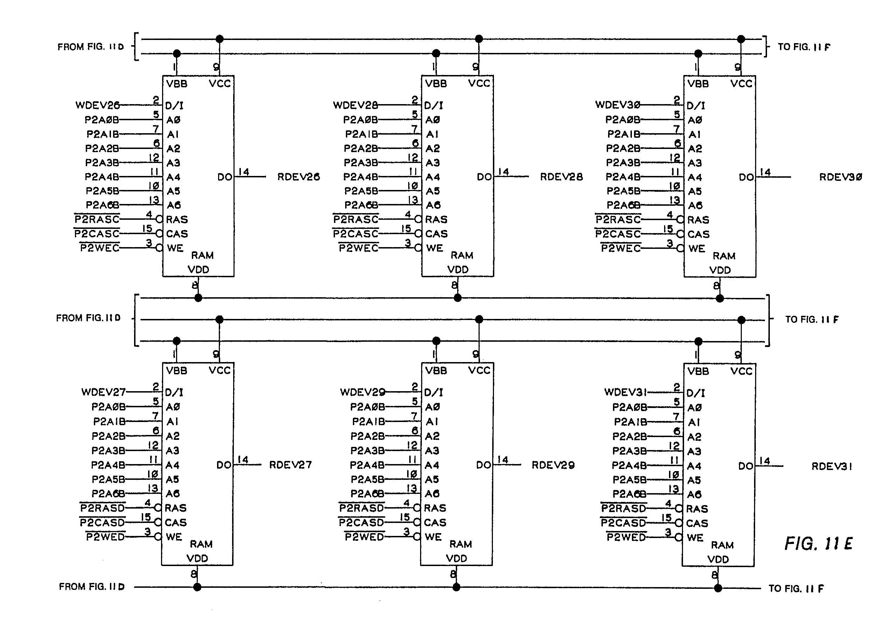

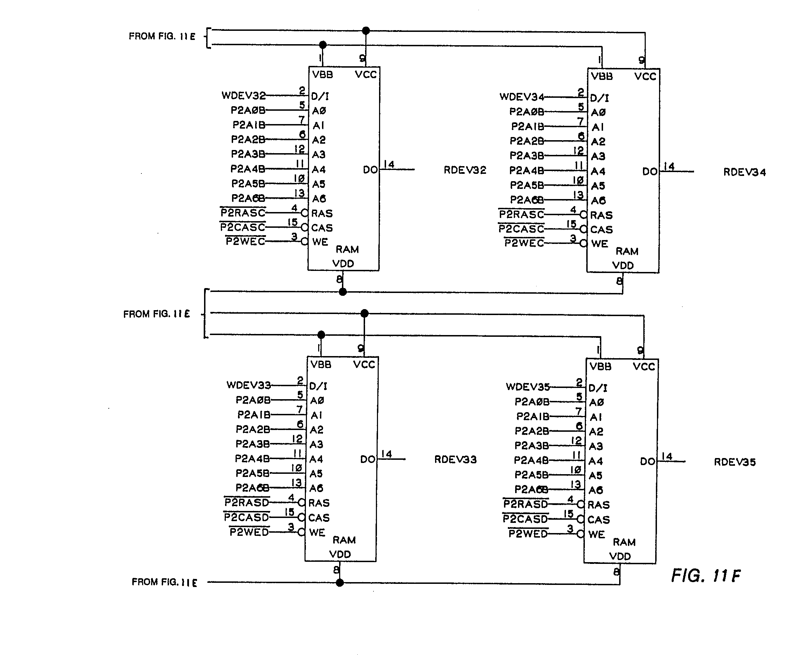

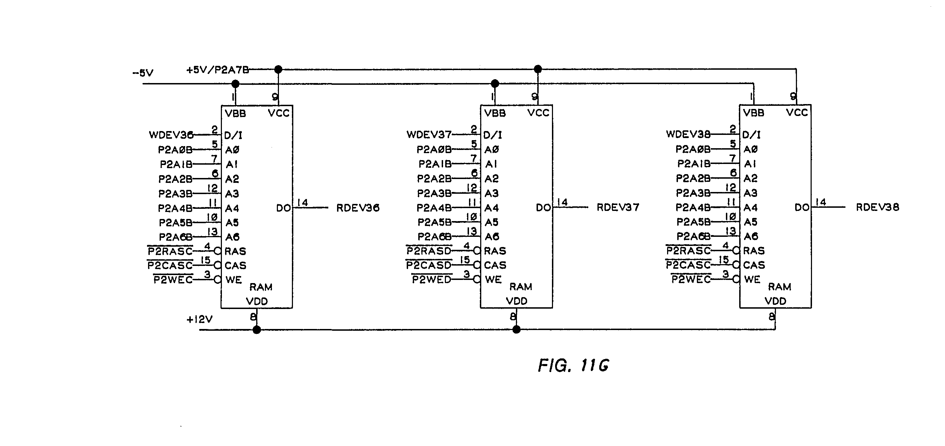

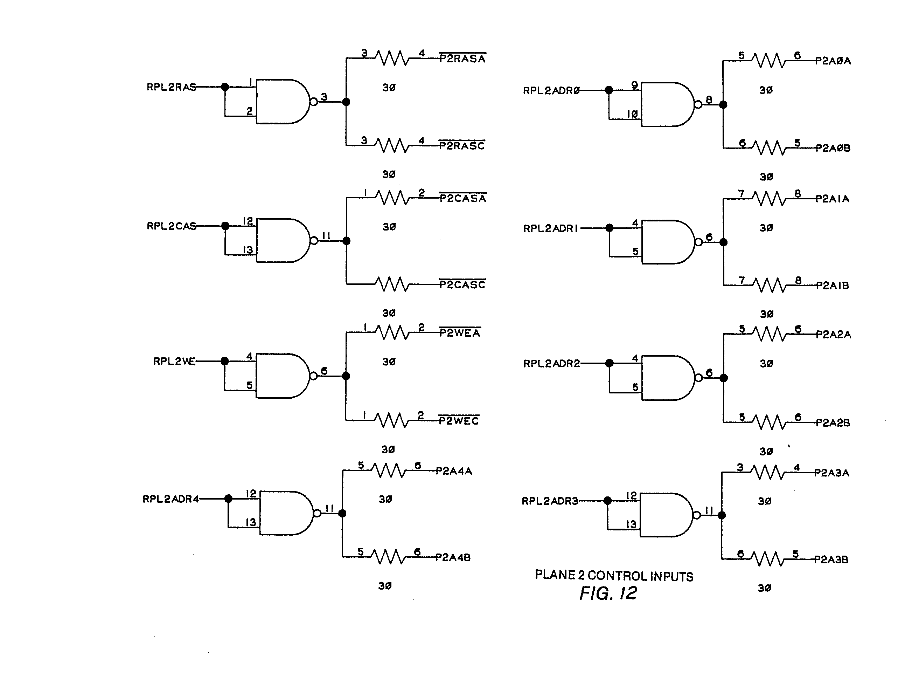

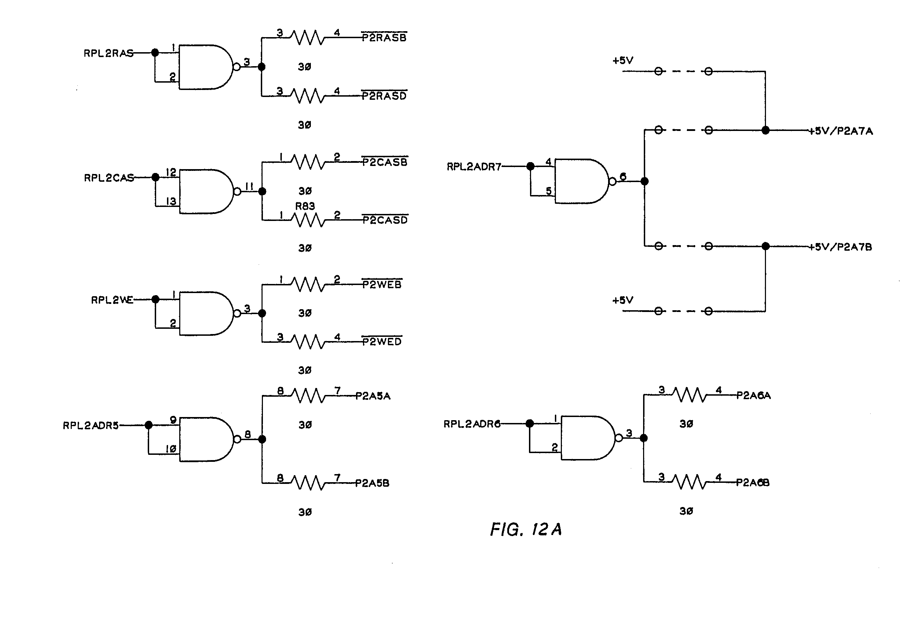

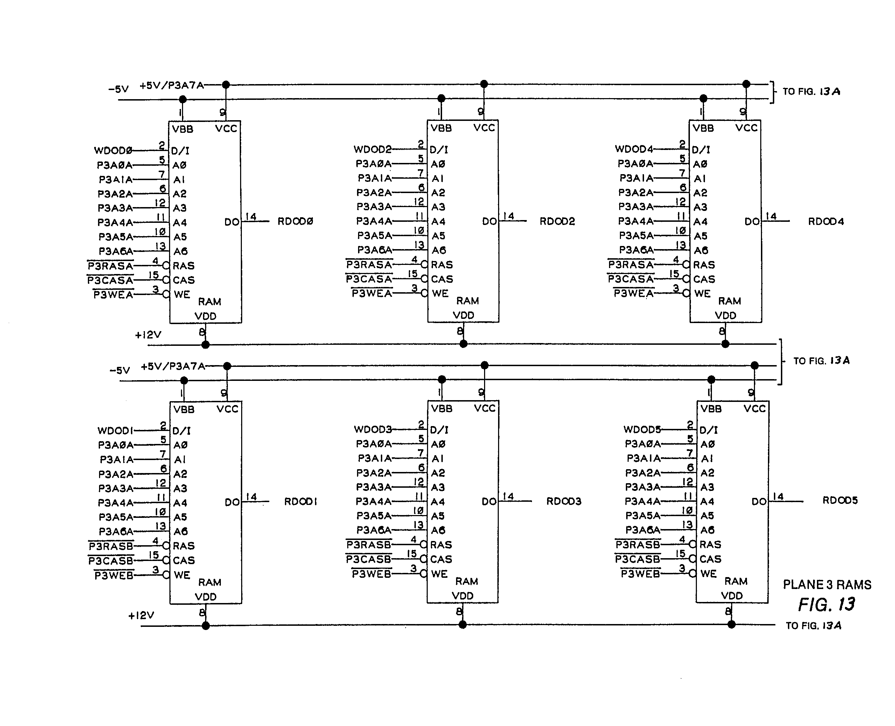

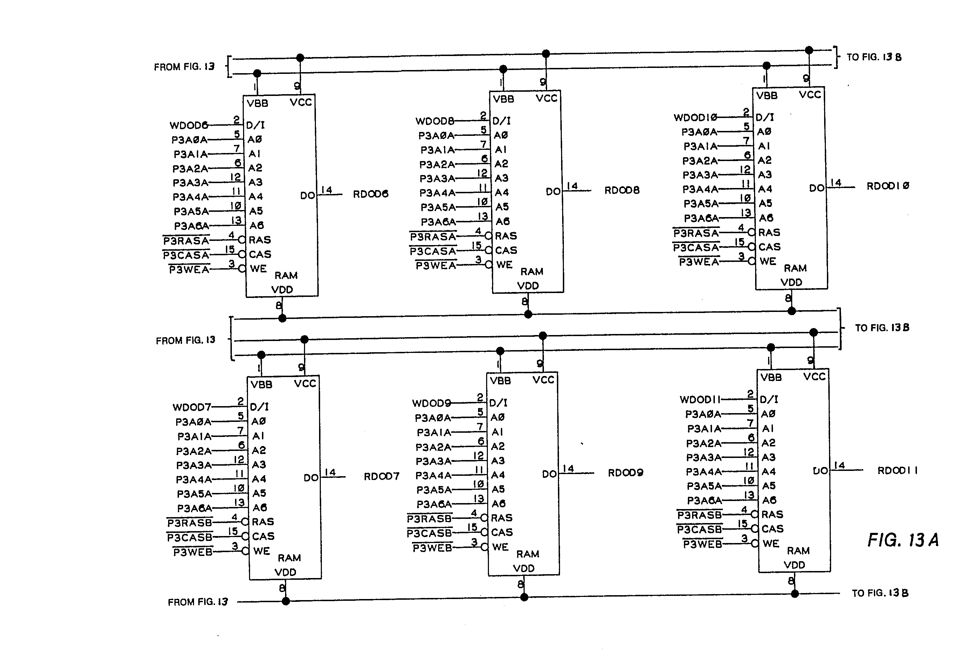

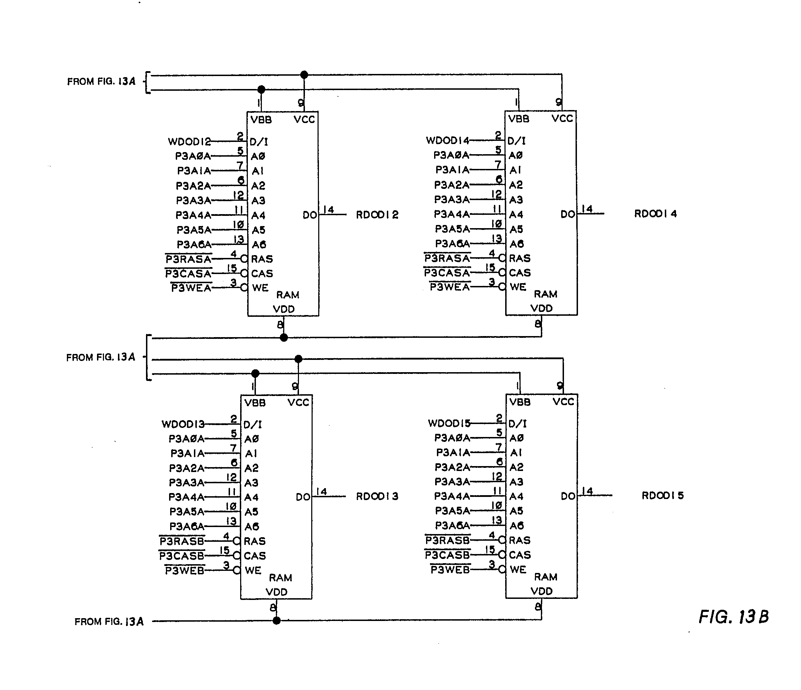

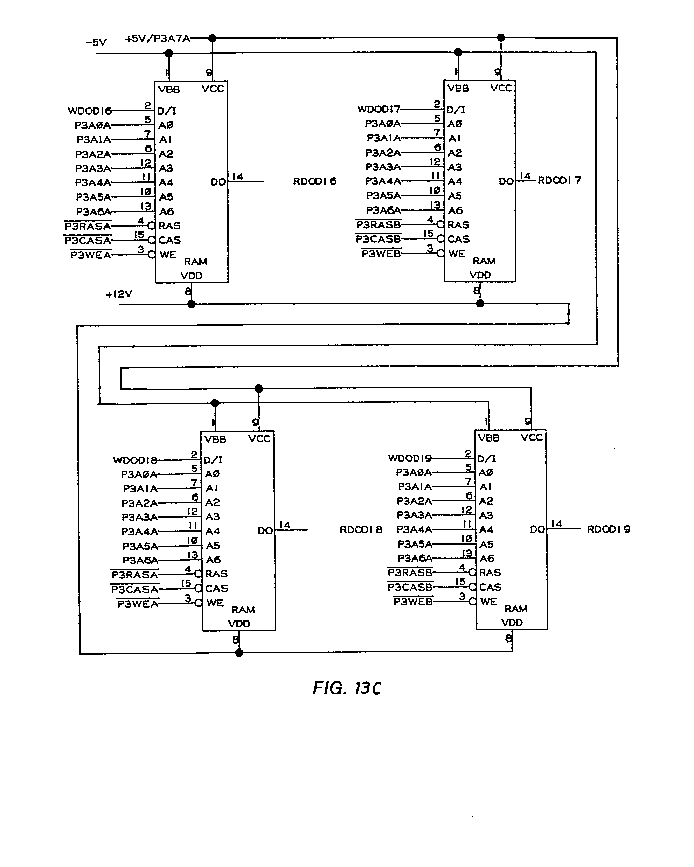

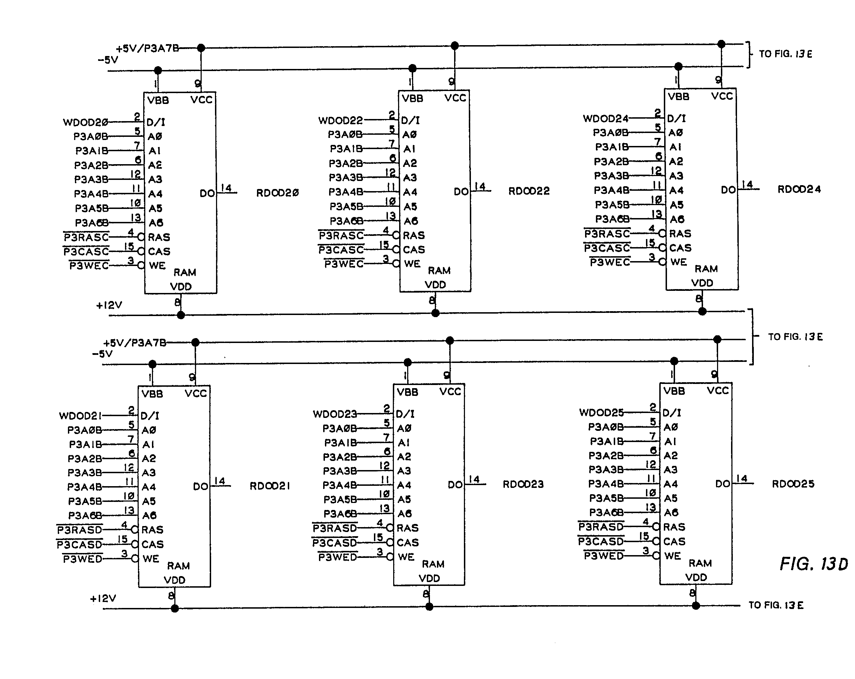

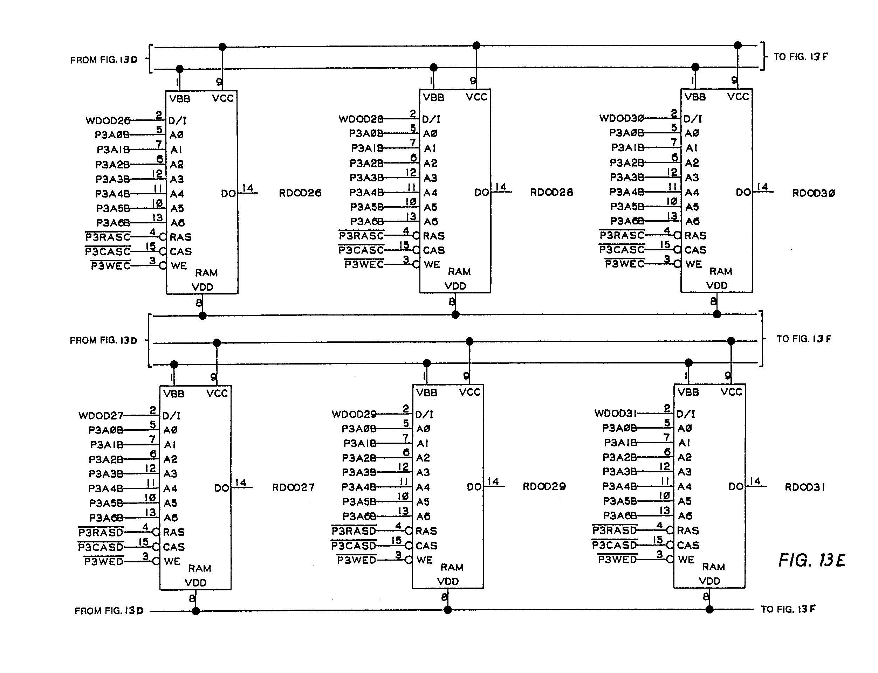

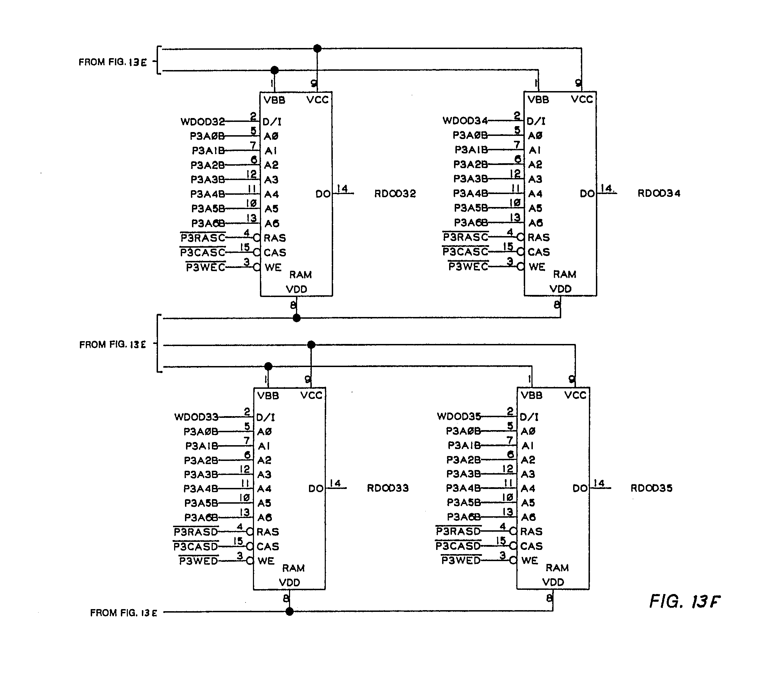

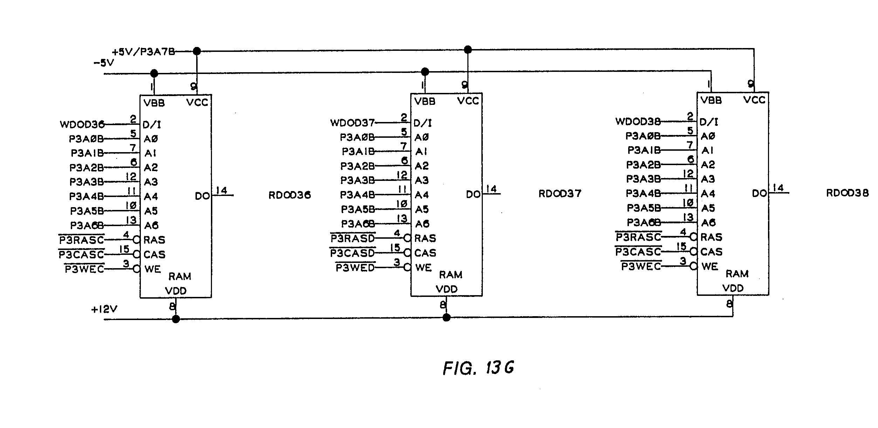

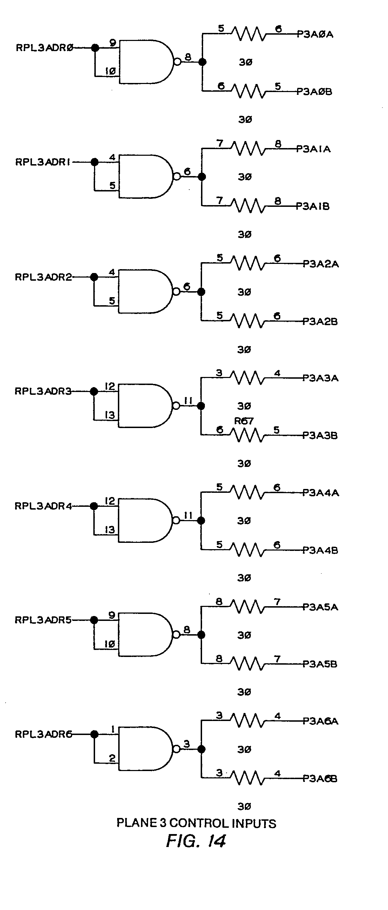

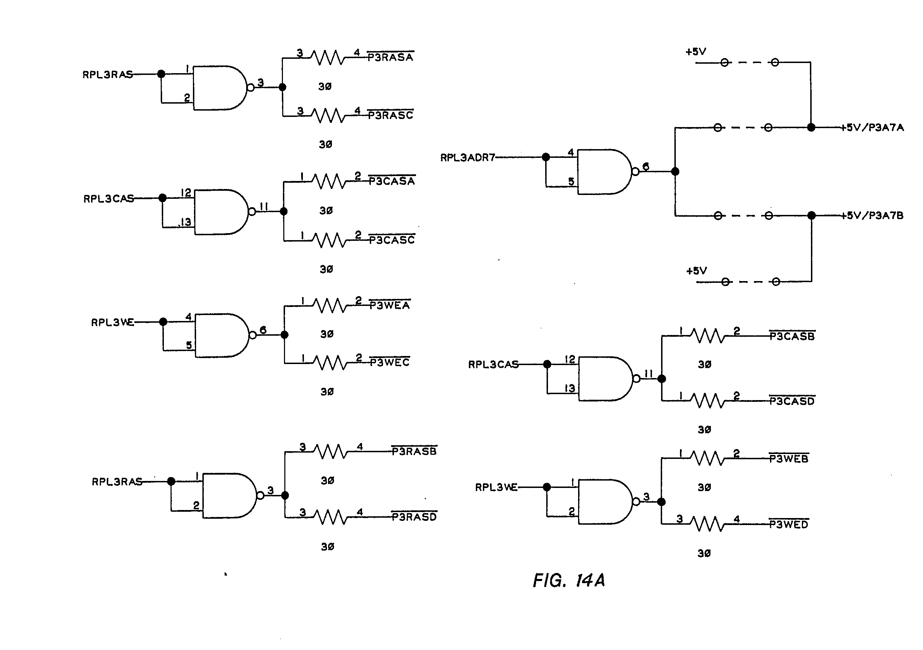

More specific detailed logic circuitry for implementing the units shown in the block diagram of FIG. 4 to achieve the desired operation as described above are shown in FIGS. 5 to 19. Data in registers 63 and 64 are shown in FIGS. 5 and 6, respectively. The memory array 60 is shown in FIGS. 7 to 14, wherein plane $\emptyset$ RAMs and the control input circuitry therefor are shown in FIGS. 7 and 8; plane 1 RAMs and the control input circuitry therefor are shown in FIGS. 9 and 10, plane 2 RAMs and the control input circuitry therefor are shown in FIGS. 11 and 12, and plane 3 RAMs and the control input circuitry therefor are shown in FIGS. 13 and 14.

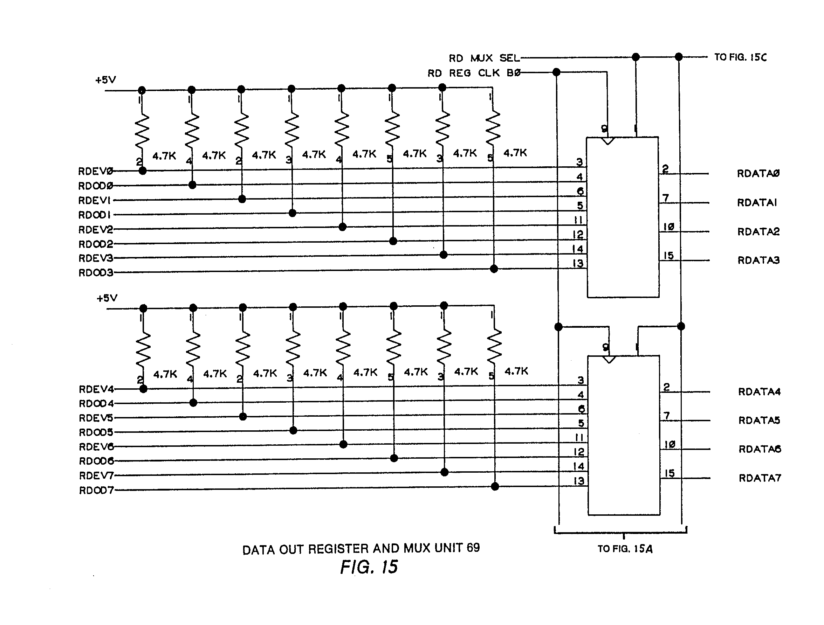

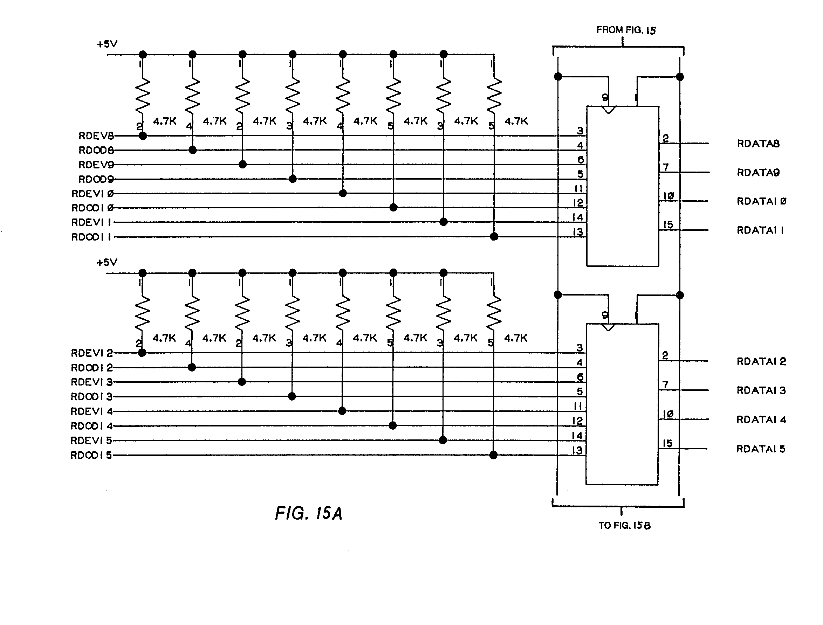

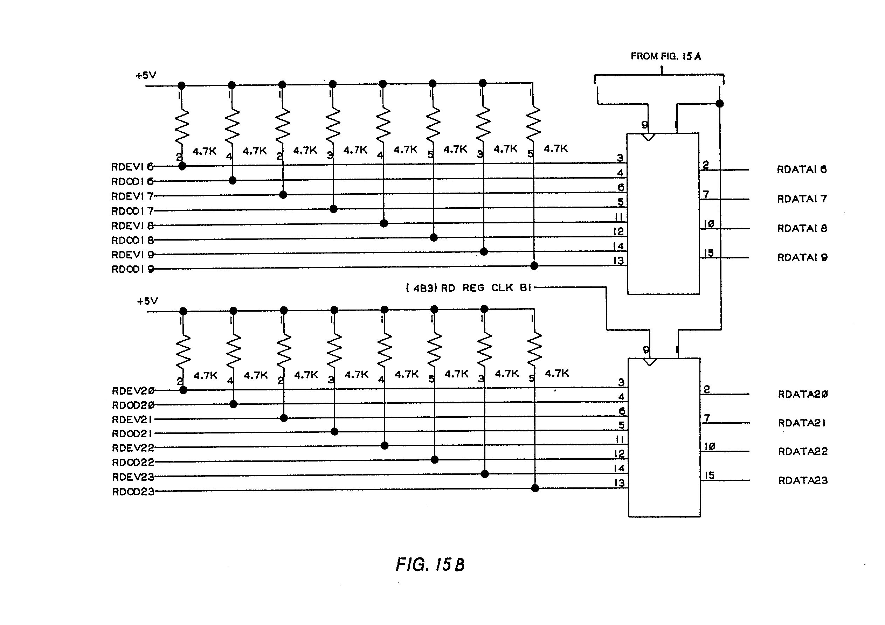

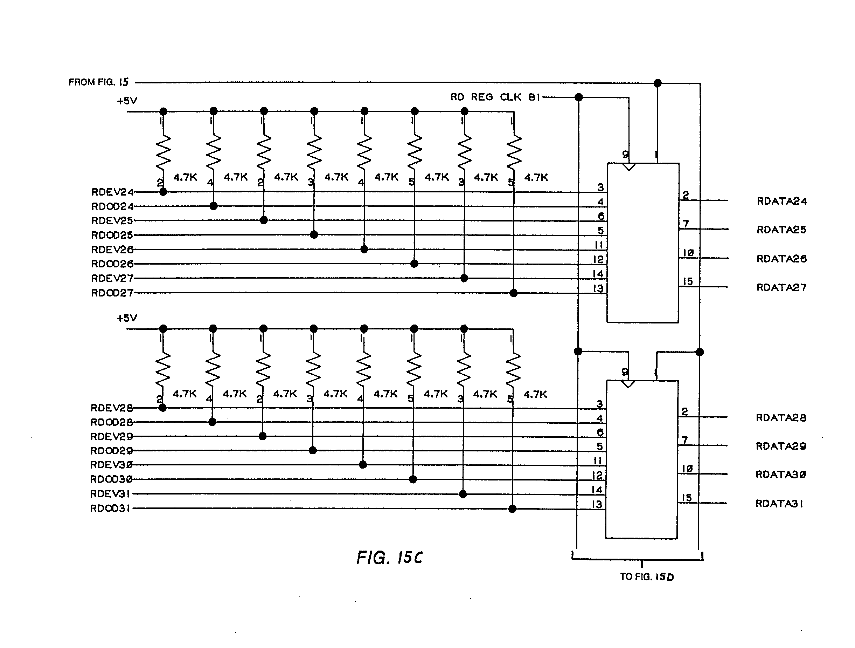

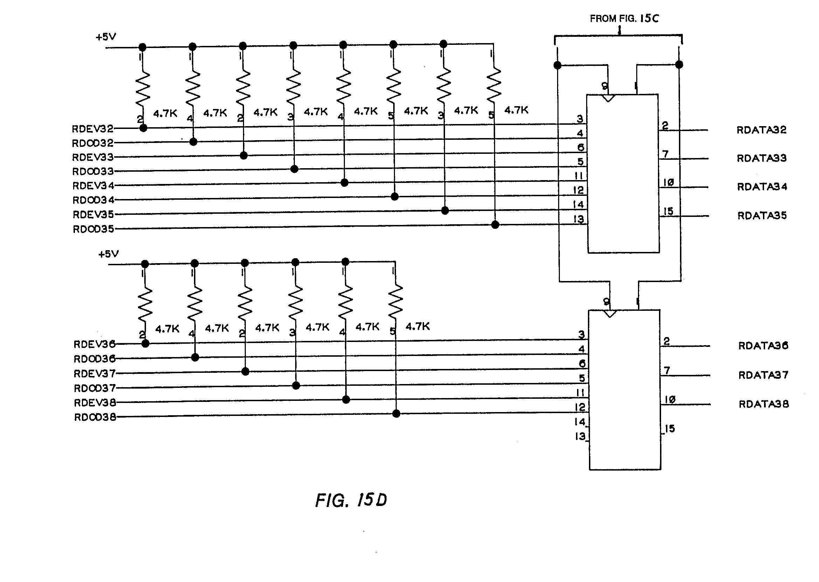

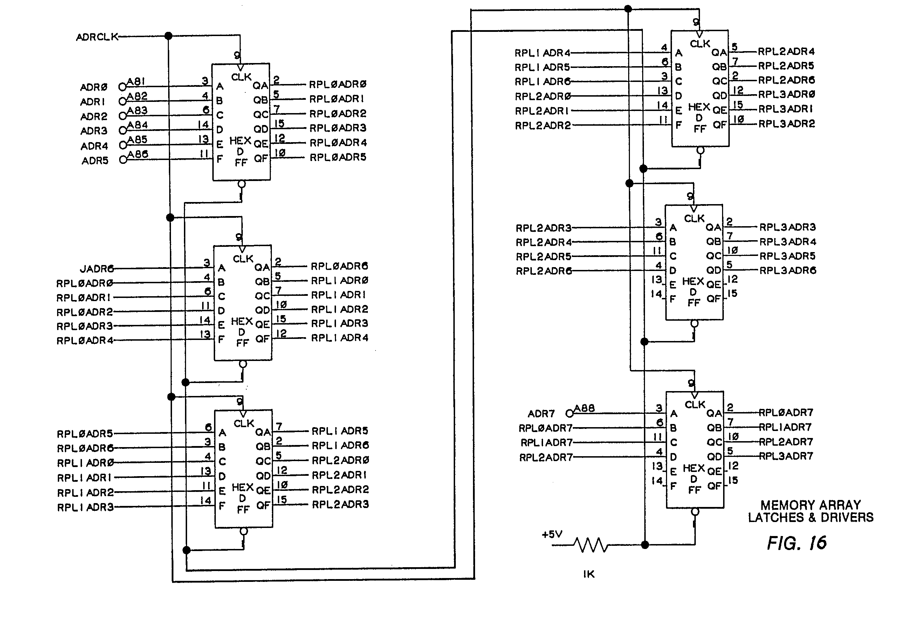

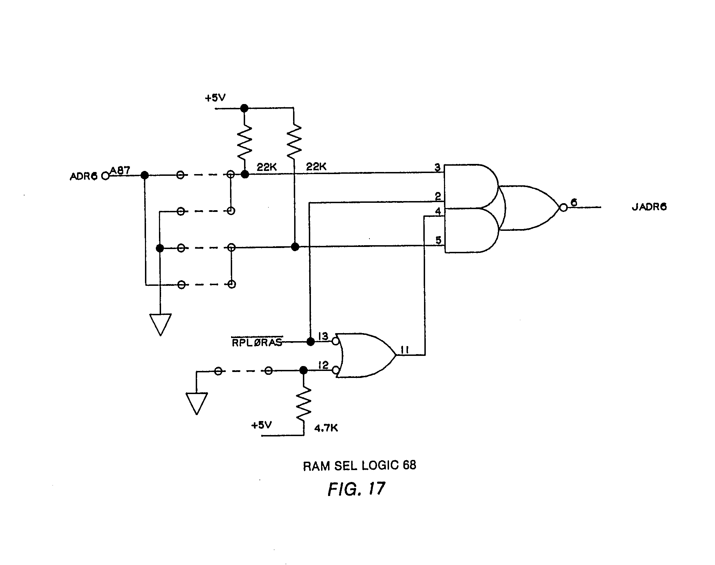

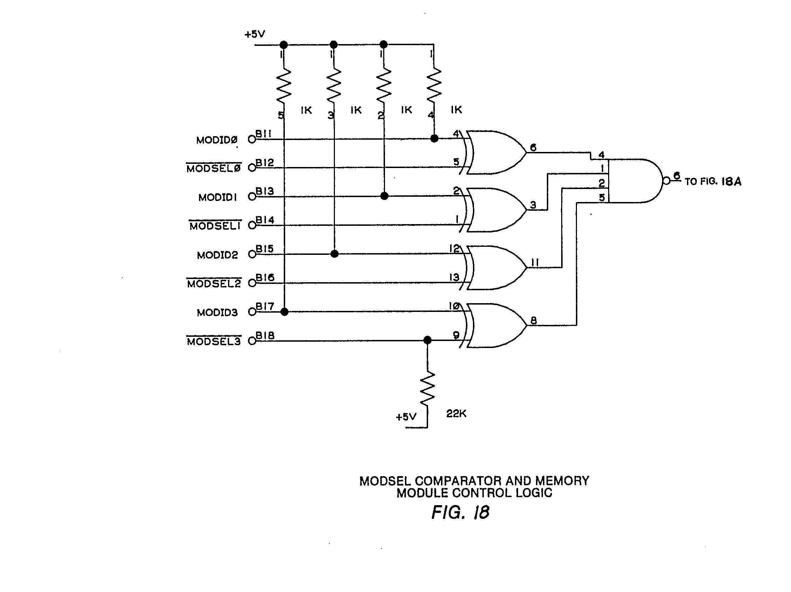

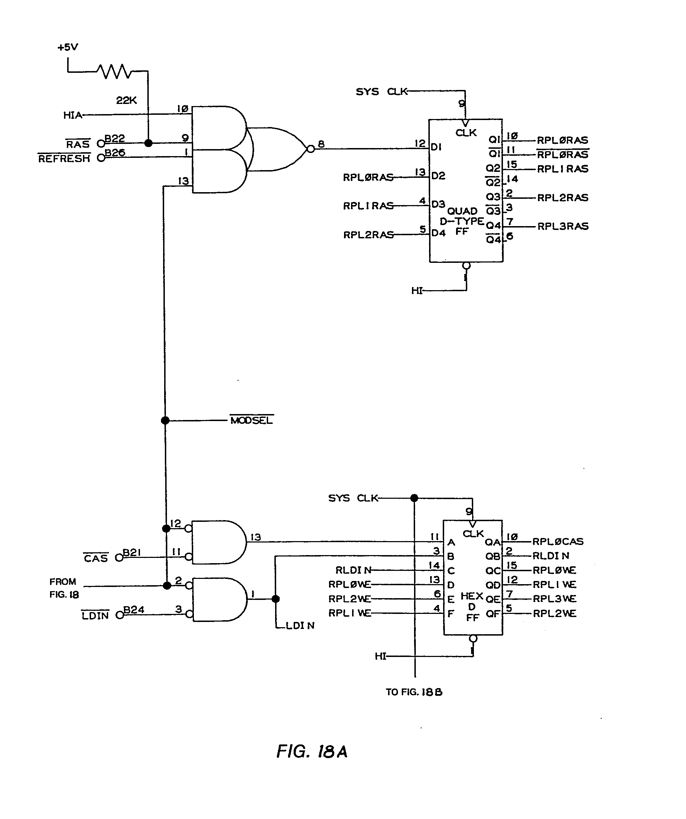

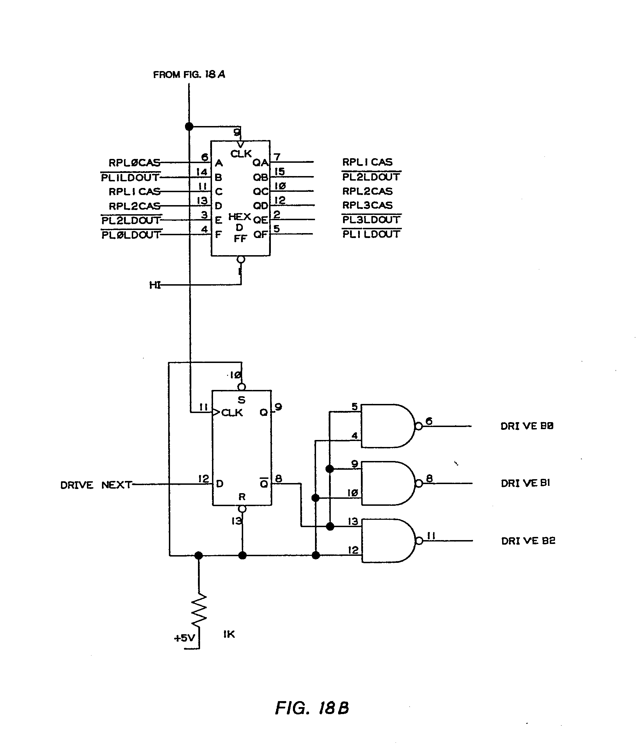

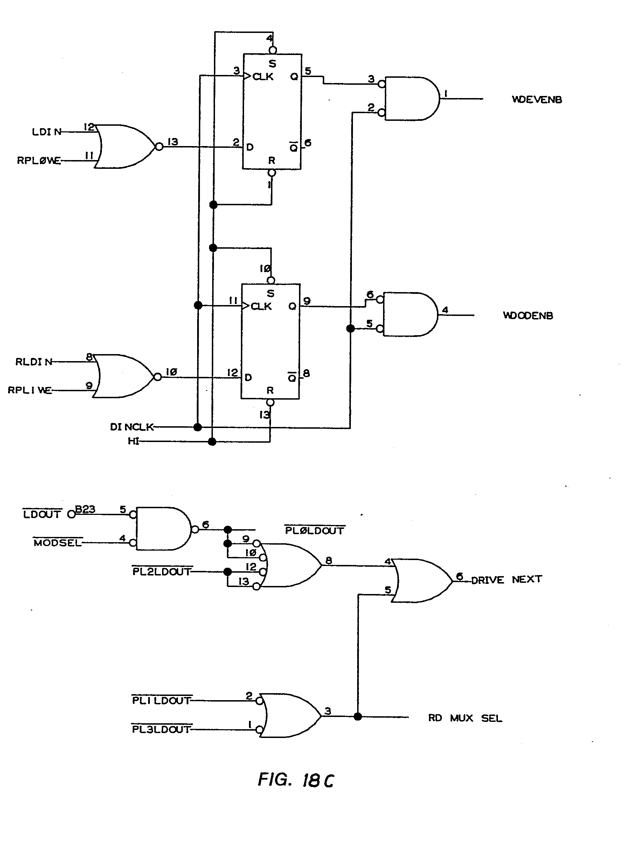

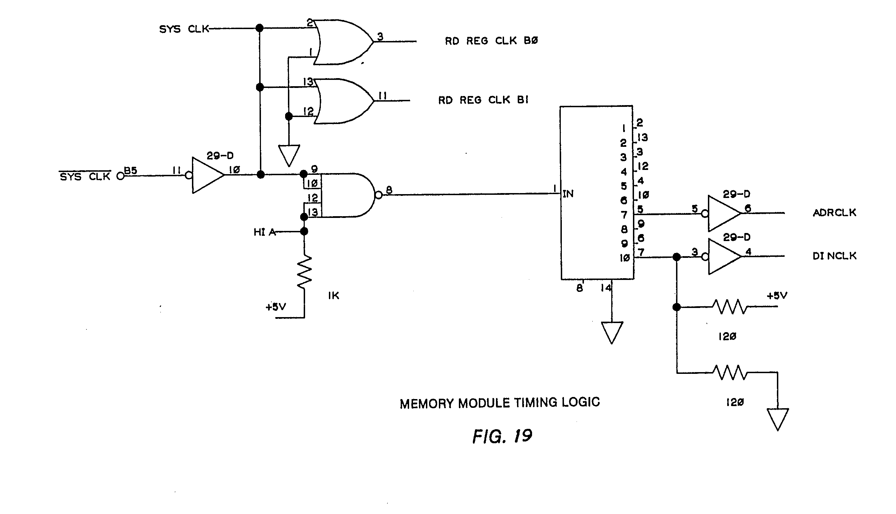

The data out register and multiplexer unit 69 are shown in FIG. 15. Latching and driver logic is shown in Fig 16. The RAM select logic unit (RAMSEL LOGIC) is shown in FIG. 17, while the $\overline{\text{MODSEL}}$ comparator unit 66 and the various control logic units and latching circuitry associated therewith and with the input control signals from bank controller unit 18 are shown in FIG. 18. Memory module timing logic is shown in FIG. 19.

- 31 -

## APPENDIX A

| DATA GENERAL CORPORATION MANUAL NO | TITLE |
|---|---|
| 015-000 009 | HOW TO USE THE NOVA COMPUTER |
| 014-000 092 | ECLIPSE M/600 PRINCIPLES OF OPERATION |
| 014-000 629 | INTERFACE DESIGN'S REFERENCE NOVA AND ECLIPSE LINE COMPUTERS |
| 014-000 617 | PROGRAMMER's REFERENCE NOVA 4 |
| 014-000 648 | ECLIPSE MV/8000 PRINCIPLES OF OPERATION |

CLAIMS

1. A data processing system having one or more processor units (11-14) and a memory interface control means (18), and a memory system (16) comprising one or more memory modules (60, Fig 4) for storing data, the location of the data bits of said data being identified by a row and column designation for each such module; characterised by means (66) responsive to a select control signal (MODSEL) from the interface control means (18), the select control signal identifying a selected module of the one or more memory modules; means (65) responsive to a row control signal (RAS) from the interface control means, the row control signal identifying a row of the selected memory module; and means (65) responsive to a column control signal (CAS) from the interface control means, the column control signal identifying a column of the selected module.

2. A data processing system in accordance with claim 1, characterised in that the memory system (16) further includes means (65) responsive to a load control signal ($\overline{\text{LDIN}}$) from the interface control means (18), the load control signal controlling the loading of data (BUFFER 62) being supplied for storage into the selected memory module (60); and means (65) responsive to an access control signal ($\overline{\text{LDOUT}}$) from the interface control system, the access control signal controlling the supplying of data (REG 69) which is being accessed from storage in the selected memory module.

3. A data processing system in accordance with claim 1 or 2, characterised in that the memory system further includes means (65) responsive to a refresh control signal ($\overline{\text{REFRESH}}$) from the interface control system (18), the refresh control signal controlling the refreshing of data which is stored in the selected module (60).

0150523

- 33 -

4.      A data processing system in accordance with claim 3, characterised in that each of the memory modules (60) includes a memory array which comprises a plurality of memory storage planes (PLANE Ø-PLANE 3) for storing data; means (65, 67, 61) responsive to the select, row, column, load and access control signals for providing row and column addresses in sequence for data in each of the memory storage planes, whereby data can be stored or accessed in sequence in to or from, respectively, the plurality of memory storage planes.

5.      A data processing system in accordance with claim 4, characterised in that the row and column address providing means include a plurality of latch and driver logic means (67, 61); and time means (SYS CLK)for providing operation of the latch and driver logic means in a selected sequence.

FIG. I

FIG.2

SYSTEM CACHE 17

2/62

0150523

BANK CONTROLLER 18

FIG.3

FIG. 4

A MODULE OF
MAIN MEMORY 16

0150523

4/62

5/62

DATA IN REGISTER 63

FIG. 5

0150523

FIG. 5A

FIG. 5B

TO FIG. 6 A

DATA IN REGISTER 64

*FIG. 6*

FIG. 6A

FIG. 6 B

PLANE Ø RAMS

FIG. 7

FIG. 7A

FROM FIG. 7    TO FIG. 7B

**RAM (top left):**
VBB  VCC
WDEV6 — 2 — D/I
P0A0A — 5 — A0
P0A1A — 7 — A1
P0A2A — 6 — A2
P0A3A — 12 — A3
P0A4A — 11 — A4    DO — 14 — RDEV6
P0A5A — 10 — A5
P0A6A — 13 — A6
P0RASA — 4 — RAS
P0CASA — 15 — CAS
P0WEA — 3 — WE
RAM
VDD — 8

**RAM (top middle):**
VBB  VCC
WDEV8 — 2 — D/I
P0A0A — 5 — A0
P0A1A — 7 — A1
P0A2A — 6 — A2
P0A3A — 12 — A3
P0A4A — 11 — A4    DO — 14 — RDEV8
P0A5A — 10 — A5
P0A6A — 13 — A6
P0RASA — 4 — RAS
P0CASA — 15 — CAS
P0WEA — 3 — WE
RAM
VDD — 8

**RAM (top right):**
VBB  VCC
WDEV10 — 2 — D/I
P0A0A — 5 — A0
P0A1A — 7 — A1
P0A2A — 6 — A2
P0A3A — 12 — A3
P0A4A — 11 — A4    DO — 14 — RDEV10
P0A5A — 10 — A5
P0A6A — 13 — A6
P0RASA — 4 — RAS
P0CASA — 15 — CAS
P0WEA — 3 — WE
RAM
VDD — 8

FROM FIG. 7    TO FIG. 7B

**RAM (bottom left):**
VBB  VCC
WDEV7 — 2 — D/I
P0A0A — 5 — A0
P0A1A — 7 — A1
P0A2A — 6 — A2
P0A3A — 12 — A3
P0A4A — 11 — A4    DO — 14 — RDEV7
P0A5A — 10 — A5
P0A6A — 13 — A6
P0RASB — 4 — RAS
P0CASB — 15 — CAS
P0WEB — 3 — WE
RAM
VDD — 8

**RAM (bottom middle):**
VBB  VCC
WDEV9 — 2 — D/I
P0A0A — 5 — A0
P0A1A — 7 — A1
P0A2A — 6 — A2
P0A3A — 12 — A3
P0A4A — 11 — A4    DO — 14 — RDEV9
P0A5A — 10 — A5
P0A6A — 13 — A6
P0RASB — 4 — RAS
P0CASB — 15 — CAS
P0WEB — 3 — WE
RAM
VDD — 8

**RAM (bottom right):**
VBB  VCC
WDEV11 — 2 — D/I
P0A0A — 5 — A0
P0A1A — 7 — A1
P0A2A — 6 — A2
P0A3A — 12 — A3
P0A4A — 11 — A4    DO — 14 — RDEV11
P0A5A — 10 — A5
P0A6A — 13 — A6
P0RASB — 4 — RAS
P0CASB — 15 — CAS
P0WEB — 3 — WE
RAM
VDD — 8

FROM FIG. 7    TO FIG. 7B

12/62

0150523

FROM FIG. 7A

VBB        VCC
WDEVI2 — 2 — D/I
PØAØA — 5 — AØ
PØAIA — 7 — AI
PØA2A — 6 — A2
PØA3A — 12 — A3
PØA4A — 11 — A4      DO — 14 —        RDEVI 2
PØA5A — 10 — A5
PØA6A — 13 — A6
P̄ØRASA̅ — 4 — RAS
P̄ØCASA̅ — 15 — CAS
P̄ØWEA̅ — 3 — WE    RAM
VDD

VBB        VCC
WDEVI4 — 2 — D/I
PØAØA — 5 — AØ
PØAIA — 7 — AI
PØA2A — 6 — A2
PØA3A — 12 — A3
PØA4A — 11 — A4      DO — 14 —        RDEVI 4
PØA5A — 10 — A5
PØA6A — 13 — A6
P̄ØRASA̅ — 4 — RAS
P̄ØCASA̅ — 15 — CAS
P̄ØWEA̅ — 3 — WE    RAM
VDD

FROM FIG. 7A

VBB        VCC
WDEVI3 — 2 — D/I
PØAØA — 5 — AØ
PØAIA — 7 — AI
PØA2A — 6 — A2
PØA3A — 12 — A3
PØA4A — 11 — A4      DO — 14 —        RDEVI 3
PØA5A — 10 — A5
PØA6A — 13 — A6
P̄ØRASB̅ — 4 — RAS
P̄ØCASB̅ — 15 — CAS
P̄ØWEB̅ — 3 — WE    RAM
VDD

VBB        VCC
WDEVI5 — 2 — D/I
PØAØA — 5 — AØ
PØAIA — 7 — AI
PØA2A — 6 — A2
PØA3A — 12 — A3
PØA4A — 11 — A4      DO — 14 —        RDEVI 5
PØA5A — 10 — A5
PØA6A — 13 — A6
P̄ØRASB̅ — 4 — RAS
P̄ØCASB̅ — 15 — CAS
P̄ØWEB̅ — 3 — WE    RAM
VDD

FROM FIG. 7A

*FIG. 7B*

13/62

0150523

FIG. 7C

FIG. 7D

FIG. 7E

16/62

0150523

FIG. 7F

FIG. 7C

PLANE Ø CONTROL INPUTS

FIG. 8

FIG. 8A

RPLØCAS 12 13 — 11 — 30 — 1 ⌇ 2 P̄ØCASA̅ — 1 ⌇ 2 P̄ØCASC̅ 30

RPLØADR4 12 13 — 11 — 30 — 5 ⌇ 6 PØA4A — 5 ⌇ 6 PØA4B 30

RPLØADR5 9 10 — 8 — 30 — 8 ⌇ 7 PØA5A — 8 ⌇ 7 PØA5B 30

RPLØADR6 1 2 — 3 — 30 — 3 ⌇ 4 PØA6A — 3 ⌇ 4 PØA6B 30

+5V
+5V
RPLØADR7 4 5 — 6 — +5V/PØA7A
+5V/PØA7B
+5V
+5V

RPLØWE 4 5 — 6 — 30 — 1 ⌇ 2 P̄ØWEA̅ — 1 ⌇ 2 P̄ØWEC̅ 30

PLANE 1 RAMS

*FIG. 9*

FROM FIG 9

TO FIG. 9B

VBB VCC

WDOD6 —2— D/I
PIAØA —5— AØ
PIAIA —7— AI
PIA2A —6— A2
PIA3A —12— A3
PIA4A —11— A4      DO 14      RDOD6
PIA5A —10— A5
PIA6A —13— A6
PIRASA —4—O RAS
PICASA —15—O CAS
PIWEA —3—O WE
RAM
VDD

VBB VCC

WDOD8 —2— D/I
PIAØA —5— AØ
PIAIA —7— AI
PIA2A —6— A2
PIA3A —12— A3
PIA4A —11— A4      DO 14      RDOD8
PIA5A —10— A5
PIA6A —13— A6
PIRASA —4—O RAS
PICASA —15—O CAS
PIWEA —3—O WE
RAM
VDD

VBB VCC

WDOD10 —2— D/I
PIAØA —5— AØ
PIAIA —7— AI
PIA2A —6— A2
PIA3A —12— A3
PIA4A —11— A4      DO 14      RDOD1Ø
PIA5A —10— A5
PIA6A —13— A6
PIRASA —4—O RAS
PICASA —15—O CAS
PIWEA —3—O WE
RAM
VDD

FROM FIG 9

TO FIG. 9B

VBB VCC

WDOD7 —2— D/I
PIAØA —5— AØ
PIAIA —7— AI
PIA2A —6— A2
PIA3A —12— A3
PIA4A —11— A4      DO 14      RDOD7
PIA5A —10— A5
PIA6A —13— A6
PIRASB —4—O RAS
PICASB —15—O CAS
PIWEB —3—O WE
RAM
VDD

VBB VCC

WDOD9 —2— D/I
PIAØA —5— AØ
PIAIA —7— AI
PIA2A —6— A2
PIA3A —12— A3
PIA4A —11— A4      DO 14      RDOD9
PIA5A —10— A5
PIA6A —13— A6
PIRASB —4—O RAS
PICASB —15—O CAS
PIWEB —3—O WE
RAM
VDD

VBB VCC

WDOD11 —2— D/I
PIAØA —5— AØ
PIAIA —7— AI
PIA2A —6— A2
PIA3A —12— A3
PIA4A —11— A4      DO 14      RDOD11
PIA5A —10— A5
PIA6A —13— A6
PIRASB —4—O RAS
PICASB —15—O CAS
PIWEB —3—O WE
RAM
VDD

FROM FIG. 9

TO FIG. 9B

*FIG. 9A*

FIG. 9B

FROM FIG. 9A

23/62

0150523

FIG. 9C

FIG. 9D

FIG. 9E

FIG. 9 F

FROM FIG. 9 E

FIG. 9G

PLANE 1 CONTROL INPUTS

FIG. 10

RPL1 ADR3 — 12 13 — 11

3 — 4 — PIA3A
30

6 — 5 — PIA3B
30

RPL1 ADR2 — 4 5 — 6

5 — 6 — PIA2A
30

5 — 6 — PIA2B
30

RPL1 ADR5 — 9 10 — 8

8 — 7 — PIA5A
30

8 — 7 — PIA5B
30

RPL1 ADR4 — 12 13 — 11

5 — 6 — PIA4A
30

5 — 6 — PIA4B
30

+5V

RPL1 ADR7 — 4 5 — 6

+5V/PIA7A

+5V/PIA7B

+5V

RPL1 ADR6 — 1 2 — 3

3 — 4 — PIA6A
30

3 — 4 — PIA6B
30

FIG. 10A

0150523

*FIG. 11*  PLANE 2 RAMS

FIG. 11A

FIG. 11B

FROM FIG. 11A

RDEVI 2

| | |
|---|---|
| WDEVI2 — 2 | D/I |
| P2AØA — 5 | AØ |
| P2AIA — 7 | AI |
| P2A2A — 6 | A2 |
| P2A3A — 12 | A3 |
| P2A4A — 11 | A4 |  DO 14 |
| P2A5A — 10 | A5 |
| P2A6A — 13 | A6 |
| P̄2̄R̄Ā S̄Ā — 4 | RAS |
| P̄2̄C̄Ā S̄Ā — 15 | CAS |
| P̄2̄W̄Ē Ā — 3 | WE |

RAM
VBB VCC VDD

RDEVI 4

| | |
|---|---|
| WDEVI4 — 2 | D/I |
| P2AØA — 5 | AØ |
| P2AIA — 7 | AI |
| P2A2A — 6 | A2 |
| P2A3A — 12 | A3 |
| P2A4A — 11 | A4 |  DO 14 |
| P2A5A — 10 | A5 |
| P2A6A — 13 | A6 |
| P̄2̄R̄Ā S̄Ā — 4 | RAS |
| P̄2̄C̄Ā S̄Ā — 15 | CAS |
| P̄2̄W̄Ē Ā — 3 | WE |

FROM FIG. 11A

RDEVI 3

| | |
|---|---|
| WDEVI3 — 2 | D/I |
| P2AØA — 5 | AØ |
| P2AIA — 7 | AI |
| P2A2A — 6 | A2 |
| P2A3A — 12 | A3 |
| P2A4A — 11 | A4 |  DO 14 |
| P2A5A — 10 | A5 |
| P2A6A — 13 | A6 |
| P̄2̄R̄Ā S̄B̄ — 4 | RAS |
| P̄2̄C̄Ā S̄B̄ — 15 | CAS |
| P̄2̄W̄Ē B̄ — 3 | WE |

RDEVI 5

| | |
|---|---|
| WDEVI5 — 2 | D/I |
| P2AØA — 5 | AØ |
| P2AIA — 7 | AI |
| P2A2A — 6 | A2 |
| P2A3A — 12 | A3 |
| P2A4A — 11 | A4 |  DO 14 |
| P2A5A — 10 | A5 |
| P2A6A — 13 | A6 |
| P̄2̄R̄Ā S̄B̄ — 4 | RAS |
| P̄2̄C̄Ā S̄B̄ — 15 | CAS |
| P̄2̄W̄Ē B̄ — 3 | WE |

FROM FIG. 11A

33/62

0150523

-5V  +5V/P2A7A

| | | | | |
|---|---|---|---|---|
| | VBB | VCC | | |
| WDEV16 —2— | D/I | | | |
| P2AØA —5— | AØ | | | |
| P2A1A —7— | A1 | | | |
| P2A2A —6— | A2 | | | |
| P2A3A —12— | A3 | | DO —14— | RDEV16 |
| P2A4A —11— | A4 | | | |
| P2A5A —1Ø— | A5 | | | |
| P2A6A —13— | A6 | | | |
| P2RASA —4— | RAS | | | |
| P2CASA —15— | CAS | | | |
| P2WEA —3— | WE | RAM | | |
| | | VDD | | |
| | | 8 | | |

| | | | | |
|---|---|---|---|---|
| | VBB | VCC | | |
| WDEV17 —2— | D/I | | | |
| P2AØA —5— | AØ | | | |
| P2A1A —7— | A1 | | | |
| P2A2A —6— | A2 | | | |
| P2A3A —12— | A3 | | DO —14— | RDEV17 |
| P2A4A —11— | A4 | | | |
| P2A5A —1Ø— | A5 | | | |
| P2A6A —13— | A6 | | | |
| P2RASB —4— | RAS | | | |
| P2CASB —15— | CAS | | | |
| P2WEB —3— | WE | RAM | | |
| | | VDD | | |
| | | 8 | | |

+12V

| | | | | |
|---|---|---|---|---|
| | VBB | VCC | | |
| WDEV18 —2— | D/I | | | |
| P2AØA —5— | AØ | | | |
| P2A1A —7— | A1 | | | |
| P2A2A —6— | A2 | | | |
| P2A3A —12— | A3 | | DO —14— | RDEV18 |
| P2A4A —11— | A4 | | | |
| P2A5A —1Ø— | A5 | | | |
| P2A6A —13— | A6 | | | |
| P2RASA —4— | RAS | | | |
| P2CASA —15— | CAS | | | |
| P2WEA —3— | WE | RAM | | |
| | | VDD | | |
| | | 8 | | |

| | | | | |
|---|---|---|---|---|
| | VBB | VCC | | |
| WDEV19 —2— | D/I | | | |
| P2AØA —5— | AØ | | | |
| P2A1A —7— | A1 | | | |
| P2A2A —6— | A2 | | | |
| P2A3A —12— | A3 | | DO —14— | RDEV19 |
| P2A4A —11— | A4 | | | |
| P2A5A —1Ø— | A5 | | | |
| P2A6A —13— | A6 | | | |
| P2RASB —4— | RAS | | | |
| P2CASB —15— | CAS | | | |
| P2WEB —3— | WE | RAM | | |
| | | VDD | | |
| | | 8 | | |

*FIG. 11C*

FIG. 11D

FIG. 11E

FIG. 11F

FIG. 11G

PLANE 2 CONTROL INPUTS
FIG. 12

FIG. 12 A

PLANE 3 RAMS

FIG. 13

FIG. 13 A

FIG. 13 B

FIG. 13C

0150523

44/62

FIG. 13D

45/62

0150523

FIG. 13E

46/62

0150523

FROM FIG. 13E

FROM FIG. 13E

FROM FIG. 13E

**RDOD32**

| | | VBB | VCC |
|---|---|---|---|
| WDOD32 | 2 | D/I | |
| P3A0B | 5 | A0 | |
| P3A1B | 7 | A1 | |
| P3A2B | 6 | A2 | |
| P3A3B | 12 | A3 | |
| P3A4B | 11 | A4 | DO 14 |
| P3A5B | 10 | A5 | |
| P3A6B | 13 | A6 | |
| P3RASC | 4 | RAS | |
| P3CASC | 15 | CAS | |
| P3WEC | 3 | WE | RAM VDD |

**RDOD34**

| | | VBB | VCC |
|---|---|---|---|
| WDOD34 | 2 | D/I | |
| P3A0B | 5 | A0 | |
| P3A1B | 7 | A1 | |
| P3A2B | 6 | A2 | |
| P3A3B | 12 | A3 | |
| P3A4B | 11 | A4 | DO 14 |
| P3A5B | 10 | A5 | |
| P3A6B | 13 | A6 | |
| P3RASC | 4 | RAS | |
| P3CASC | 15 | CAS | |
| P3WEC | 3 | WE | RAM VDD |

**RDOD33**

| | | VBB | VCC |
|---|---|---|---|
| WDOD33 | 2 | D/I | |
| P3A0B | 5 | A0 | |
| P3A1B | 7 | A1 | |
| P3A2B | 6 | A2 | |
| P3A3B | 12 | A3 | |
| P3A4B | 11 | A4 | DO 14 |
| P3A5B | 10 | A5 | |
| P3A6B | 13 | A6 | |
| P3RASD | 4 | RAS | |
| P3CASD | 15 | CAS | |
| P3WED | 3 | WE | RAM VDD |

**RDOD35**

| | | VBB | VCC |
|---|---|---|---|
| WDOD35 | 2 | D/I | |
| P3A0B | 5 | A0 | |
| P3A1B | 7 | A1 | |
| P3A2B | 6 | A2 | |
| P3A3B | 12 | A3 | |
| P3A4B | 11 | A4 | DO 14 |
| P3A5B | 10 | A5 | |
| P3A6B | 13 | A6 | |
| P3RASD | 4 | RAS | |
| P3CASD | 15 | CAS | |
| P3WED | 3 | WE | RAM VDD |

*FIG. 13F*

FIG. 13G

RPL3ADRØ —— 9
10 —— 8 —— 5 /\/\/\ 6 —— P3AØA
30
6 /\/\/\ 5 —— P3AØB
30

RPL3ADRI —— 4
5 —— 6 —— 7 /\/\/\ 8 —— P3AIA
30
7 /\/\/\ 8 —— P3AIB
30

RPL3ADR2 —— 4
5 —— 6 —— 5 /\/\/\ 6 —— P3A2A
30
5 /\/\/\ 6 —— P3A2B
30

RPL3ADR3 —— 12
13 —— 11 —— 3 /\/\/\ 4 —— P3A3A
30
R67
6 /\/\/\ 5 —— P3A3B
30

RPL3ADR4 —— 12
13 —— 11 —— 5 /\/\/\ 6 —— P3A4A
30
5 /\/\/\ 6 —— P3A4B
30

RPL3ADR5 —— 9
10 —— 8 —— 8 /\/\/\ 7 —— P3A5A
30
8 /\/\/\ 7 —— P3A5B
30

RPL3ADR6 —— 1
2 —— 3 —— 3 /\/\/\ 4 —— P3A6A
30
3 /\/\/\ 4 —— P3A6B
30

PLANE 3 CONTROL INPUTS

*FIG. 14*

FIG. 14A

DATA OUT REGISTER AND MUX UNIT 69

*FIG. 15*

0150523

FIG. 15A

RDATAI6
RDATAI7
RDATAI8
RDATAI9

RDATA20
RDATA21
RDATA22
RDATA23

FROM FIG. 15A

( 4B3) RD REG CLK BI

4.7K

+5V

RDEVI6
RDOO16
RDEVI7
RDOO17
RDEVI8
RDOO18
RDEVI9
RDOO19

+5V

RDEV20
RDOO20
RDEV21
RDOO21
RDEV22
RDOO22
RDEV23
RDOO23

*FIG. 15 B*

RDATA24
RDATA25
RDATA26
RDATA27

RDATA28
RDATA29
RDATA30
RDATA31

TO FIG. 15D

FROM FIG. 15

RD REG CLK B1

+5V

4.7K
4.7K
4.7K
4.7K
4.7K
4.7K
4.7K
4.7K

RDEV24
RDOD24
RDEV25
RDOD25
RDEV26
RDOD26
RDEV27
RDOD27

+5V

4.7K
4.7K
4.7K
4.7K
4.7K
4.7K
4.7K
4.7K

RDEV28
RDOD28
RDEV29
RDOD29
RDEV30
RDOD30
RDEV31
RDOD31

FIG. 15C

FIG. 15D

MEMORY ARRAY
LATCHES & DRIVERS

FIG. 16

0150523

56/62

**FIG. 17**

RAM SEL LOGIC 68

JADR6

ADR6 A87

RPL ØRAS

+5V  22K  22K  4.7K

MODSEL COMPARATOR AND MEMORY
MODULE CONTROL LOGIC

FIG. 18

FIG. 18A

FIG. 18B

FIG. 18C

MEMORY MODULE TIMING LOGIC

*FIG. 19*